(19) **Europäisches Patentamt / European Patent Office / Office européen des brevets**

(11) **EP 4 621 686 A1**

(12) **EUROPEAN PATENT APPLICATION**
published in accordance with Art. 153(4) EPC

(43) Date of publication:
24.09.2025 Bulletin 2025/39

(21) Application number: 24893630.4

(22) Date of filing: 24.11.2024

(51) International Patent Classification (IPC):
*G06Q 30/018* (2023.01)     *G06Q 10/30* (2023.01)
*G16C 20/30* (2019.01)

(52) Cooperative Patent Classification (CPC):
G06Q 10/30; G06Q 30/018; G16C 20/30;
Y02W 30/84

(86) International application number:
PCT/CN2024/134039

(87) International publication number:
WO 2025/108477 (30.05.2025 Gazette 2025/22)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 24.11.2023 PCT/CN2023/134168

(71) Applicants:
• Guangdong Brunp Recycling Technology Co., Ltd.
Foshan, Guangdong 528137 (CN)
• Hunan Brunp Recycling Technology Co., Ltd.
Changsha, Hunan 410600 (CN)

(72) Inventors:
• YU, Haijun
Foshan, Guangdong 528137 (CN)
• XIE, Yinghao
Foshan, Guangdong 528137 (CN)
• XU, Jialei
Foshan, Guangdong 528137 (CN)
• LI, Aixia
Foshan, Guangdong 528137 (CN)
• GUO, Shaohui
Foshan, Guangdong 528137 (CN)
• LI, Changdong
Foshan, Guangdong 528137 (CN)

(74) Representative: Manresa Medina, José Manuel
Manresa Industrial Property Netherlands B.V.
Weena 43C
3013 CD Rotterdam (NL)

(54) **RMS-BASED ACCOUNTING AND TRACING METHOD AND APPARATUS FOR PROPORTION OF RECYCLED MATERIAL, AND STORAGE MEDIUM**

(57) Provided in the present application are an RMS-based accounting and tracing method and apparatus for the proportion of a recycled material, and a storage medium. The method comprises: collecting production material data within a preset system boundary range on a production line, wherein the production material data comprises the proportion of externally purchased salt in an element i of salt used in the production of a raw material of a self-produced positive electrode material, the proportion of a recycled material in the element i of the externally purchased salt, the proportion of self-produced salt in the element i of the salt used in the production of the raw material of the self-produced positive electrode material, and the proportion of a recycled material in the element i of the self-produced salt, and the salt used in the production of the raw material of the self-produced positive electrode material comprises the self-produced salt and the externally purchased salt; and on the basis of the production material data and a preset accounting formula for the proportion of a recycled material in the element i of the raw material of the self-produced positive electrode material, obtaining the proportion of the recycled material in the element i of the raw material of the self-produced positive electrode material. By using the present application, the proportion of a recycled material can be precisely accounted.

Collecting production material data within a preset system boundary range on a production line in a preset collection period, where the production material data includes: a proportion of a purchased salt in an element i of a salt composition used in production of a self-produced cathode raw material, a proportion of a recycled material in the element i of the purchased salt, a proportion of a self-produced salt in the element i of the salt composition used in the production of the self-produced cathode raw material, and a proportion of a recycled material in the element i of the self-produced salt; and the salt composition used in the production of the self-produced cathode raw material includes the self-produced salt and the purchased salt — S1

Obtaining a proportion of the recycled material in the element i of the self-produced cathode raw material according to the production material data and a preset element-i recycled material proportion calculation formula for the self-produced cathode raw material — S2

FIG. 1

## Description

This application claims priority of international application No. PCT/CN2023/134168 filed November 24, 2023, the entire contents of which are incorporated herein by reference.

## TECHNICAL FIELD

The present disclosure relates to the technical field of new energy materials, and in particular, to a Recycled Material Standard (RMS)-based recycled material proportion calculation method and a tracing method, an apparatus, a device, and a storage medium.

## BACKGROUND

With the rapid development of the global new energy economy and the rise of the electric vehicle industry, the demand for batteries has increased significantly. Batteries and their cathode materials contain many metal elements, such as cobalt, lithium, nickel, etc. However, if the raw materials for the production of batteries and their cathode materials are all primary minerals, there is a risk of resource depletion, posing a threat to environmental sustainability. To deal with these problems, many countries and regions have successively formulated regulations requiring the use of a certain proportion of waste materials or recycled materials in the production of batteries and their cathode materials, and proposed a timetable for gradual implementation of such regulations. These policies aim to reduce the exploitation of primary minerals and promote the efficient recovery and recycling of waste resources.

Since the production process of batteries and their cathode materials is complex and involves a variety of raw material sources, there is currently a lack of a method that can scientifically and systematically calculate the proportion of recycled materials in batteries, cathode materials, and production raw materials. In addition, there is still no mature technique for tracing recycled materials in the entire supply chain, making it difficult for regulatory authorities and the industry to trace recycled materials. The proportions of recycled materials in batteries, in cathode materials, and in production raw materials are also not available at present. Therefore, how to establish a method that can scientifically and systematically calculate the proportions of recycled materials in batteries, cathode materials, and production raw materials and trace the recycled materials has become an urgent problem to be solved in the art.

## SUMMARY

An objective of the present disclosure is to overcome the above-mentioned shortcomings of the prior art and provide an RMS-based recycled material proportion calculation method and tracing method, an apparatus, a device, and a storage medium, which can scientifically and systematically calculate the proportions of recycled materials in batteries, cathode materials, and production raw materials and trace the recycled materials.

In accordance with a first aspect of the present disclosure, an embodiment provides an RMS-based recycled material proportion calculation method, including:

collecting production material data within a preset system boundary range on a production line in a preset collection period, where the production material data includes: a proportion of a purchased salt in an element i of a salt composition used in production of a self-produced cathode raw material, a proportion of a recycled material in the element i of the purchased salt, a proportion of a self-produced salt in the element i of the salt composition used in the production of the self-produced cathode raw material, and a proportion of a recycled material in the element i of the self-produced salt; and the salt composition used in the production of the self-produced cathode raw material consists of the self-produced salt and the purchased salt; and

obtaining a proportion of a recycled material in the element i of the self-produced cathode raw material according to the production material data and a preset element-i recycled material proportion calculation formula for the self-produced cathode raw material,

wherein the self-produced cathode raw material is a compound containing the element i; and the element i is any one of nickel, cobalt, manganese, aluminum, iron, phosphorus, or lithium.

In the present disclosure, production material data is collected during production of a self-produced cathode raw material, and a proportion of a recycled material in an element i of the self-produced cathode raw material is obtained according to the production material data and the element-i recycled material proportion calculation formula for the self-produced cathode raw material. As such, the proportion of the recycled material in the element i of the self-produced cathode raw material can be accurately calculated, thereby obtaining the proportion of the recycled material in the element i of the self-produced cathode raw material .

With reference to the first aspect, in a possible implementation, when a raw material of the self-produced salt includes only a recycled material or a recycled raw material, the proportion of the recycled material in the element i of the self-produced salt is 100%, and the element-i recycled material proportion calculation formula for the self-produced cathode raw material is:

$$R_{Pi} = R_{Mi} * y_i + (1 - y_i),$$

where $y_i$ is the proportion of the purchased salt in the element i of the salt composition used in the production of the self-produced cathode raw material, measured in %; $(1 - y_i)$ is the proportion of the self-produced salt in the element i of the salt composition used in the production of the self-produced cathode raw material, measured in %; $R_{Mi}$ is the proportion of the recycled material in the element i of the purchased salt, measured in %; $R_{Pi}$ is the proportion of the recycled material in the element i of the self-produced cathode raw material, measured in %.

With reference to the first aspect, in a possible implementation, the production material data further includes: a mass of the element i in the purchased salt used in the production of the self-produced cathode raw material and a mass of the element i in the self-produced salt used in the production of the self-produced cathode raw material; and

the proportion of the purchased salt in the element i of the salt composition used in the production of the self-produced cathode raw material is expressed as:

$$y_i = \frac{m_{MSRi}}{m_{MSRi} + m_{MRi}},$$

where $m_{MSRi}$ is the mass of the element i in the purchased salt used in the production of the self-produced cathode raw material, measured in kg; $m_{MRi}$ is the mass of the element i in the self-produced salt used in the production of the self-produced cathode raw material, measured in kg; and $y_i$ is the proportion of the purchased salt in the element i of the salt composition used in the production of the self-produced cathode raw material, measured in %.

With reference to the first aspect, in a possible implementation, the production material data further includes: the mass of the element i in the purchased salt used in the production of the self-produced cathode raw material, a recovery rate of the element i from the salt composition to the self-produced cathode raw material, a mass of the element i in a black mass used in production of the self-produced salt, a recovery rate of the element i from the black mass to the self-produced salt, and a mass of the element i in the self-produced cathode raw material produced;

the proportion of the purchased salt in the element i of the salt composition used in the production of the self-produced cathode raw material is expressed as:

$$y_i = \frac{m_{MSRi} * v_{2i}}{m_{EPi}}$$

where $m_{MSRi}$ is the mass of the element i in the purchased salt used in the production of the self-produced cathode raw material, measured in kg; $v_{2i}$ is the recovery rate of the element i from the salt composition to the self-produced cathode raw material, measured in %; and $m_{EPi}$ is the mass of the element i in the self-produced cathode raw material produced, measured in kg; and

the proportion of the self-produced salt in the element i of the salt composition used in the production of the self-produced cathode raw material is expressed as:

$$(1 - y_i) = \frac{m_{Bi} * v_{1i} * v_{2i}}{m_{EPi}}$$

where $m_{Bi}$ is the mass of the element i in the black mass used in the production of the self-produced salt, measured in kg; and $v_{1i}$ is the recovery rate of the element i from the black mass to the self-produced salt, measured in %.

With reference to the first aspect, in a possible implementation, the element-i recycled material proportion calculation formula for the self-produced cathode raw material is:

$$R_{Pi} = R_{Mi} * y_i + R_{MBi} * (1 - y_i),$$

where $y_i$ is the proportion of the purchased salt in the element i of the salt composition used in the production of the self-produced cathode raw material, measured in %; $(1 - y_i)$ is the proportion of the self-produced salt in the element i of the salt composition used in the production of the self-produced cathode raw material, measured in %; $R_{Mi}$ is the proportion of the recycled material in the element i of the purchased salt, measured in %; $R_{MBi}$ is the proportion of the recycled material in the element i of the self-produced salt, measured in %; and $R_{Pi}$ is the proportion of the recycled material oin the element i of the self-produced cathode raw material, measured in %.

With reference to the first aspect, in a possible implementation, the production material data further includes: a mass of the element i in the purchased salt used in the production of the self-produced cathode raw material and a mass of the element i in the self-produced salt used in the production of the self-produced cathode raw material; and the proportion of the purchased salt in the element i of the salt composition used in the production of the self-produced cathode raw material is expressed as:

$$y_i = \frac{m_{MSRi}}{m_{MSRi} + m_{MRi}},$$

where $m_{MSRi}$ is the mass of the element i in the purchased salt used in the production of the self-produced cathode raw material, measured in kg; $m_{MRi}$ is the mass of the element i in the self-produced salt used in the production of the self-produced cathode raw material, measured in kg; and $y_i$ is the proportion of the purchased salt in the element i of the salt composition used in the production of the self-produced cathode raw material, measured in %.

With reference to the first aspect, in a possible implementation, the production material data further includes: the mass of the element i in the purchased salt used in the production of the self-produced cathode raw material, a recovery rate of the element i from the salt composition to the self-produced cathode raw material, the mass of the element i in a black mass used in production of the self-produced salt, the mass of the element i in a purchased material used in the production of the self-produced salt, a recovery rate of the element i from the black mass to the self-produced salt, and the mass of the element i in the self-produced cathode raw material produced;

the proportion of the purchased salt in the element i of the salt composition used in the production of the self-produced cathode raw material is expressed as:

$$y_i = \frac{m_{MSRi} * v_{2i}}{m_{EPi}}$$

where $m_{MSRi}$ is the mass of the element i in the purchased salt used in the production of the self-produced cathode raw material, measured in kg; $v_{2i}$ is the recovery rate of the element i from the salt composition to the self-produced cathode raw material, measured in %; and $m_{EPi}$ is the mass of the element i in the self-produced cathode raw material produced, measured in kg; and

the proportion of the self-produced salt in the element i of the salt composition used in the production of the self-produced cathode raw material is expressed as:

$$(1 - y_i) = \frac{(m_{Bi} + m_{MSCi}) * v_{1i} * v_{2i}}{m_{EPi}}$$

where $m_{Bi}$ is the mass of the element i in the black mass used in the production of the self-produced salt, measured in kg; $m_{MSCi}$ is a mass of the element i in the purchased material used in the production of the self-produced salt, measured in kg; and $v_{1i}$ is the recovery rate of the element i from the black mass to the self-produced salt, measured in %.

With reference to the first aspect, in a possible implementation, the production material data further includes: the mass of the element i in the black mass used in the production of the self-produced salt, the mass of the element i in the purchased material used in the production of the self-produced salt, and a proportion of a recycled material in element i in the purchased material; and

the proportion of the recycled material in the element i of the self-produced salt is expressed as:

$$R_{MBi} = \frac{m_{Bi} + m_{MSCi} * R_{MSCi}}{m_{Bi} + m_{MSCi}},$$

where $m_{Bi}$ is the mass of the element i in the black mass used in the production of the self-produced salt, measured in kg; $m_{MSCi}$ is the mass of the element i in the purchased material used in the production of the self-produced salt, measured in kg; $R_{MSCi}$ is the proportion of the recycled material in the element i of the purchased material, measured in %; and $R_{MBi}$ is the proportion of the recycled material in the element i of the self-produced salt, measured in %.

With reference to the first aspect, in a possible implementation, the production material data further includes: the mass of the element i in the black mass used in the production of the self-produced salt, the mass of the element i in the purchased material used in the production of the self-produced salt, and a proportion of a recycled material in element i in the purchased material; and

the proportion of the recycled material in the element i of the self-produced salt is expressed as:

$$R_{MBi} = \frac{m_{Bi} + m_{MSCi} * R_{MSCi}}{m_{Bi} + m_{MSCi}},$$

where $m_{Bi}$ is the mass of the element i in the black mass used in the production of the self-produced salt, measured in kg; $m_{MSCi}$ is the mass of the element i in the purchased material used in the production of the self-produced salt, measured in kg; $R_{MSCi}$ is the proportion of the recycled material in the element i of the purchased material, measured in %; and $R_{MBi}$ is the proportion of the recycled material in the element i of the self-produced salt, measured in %.

With reference to the first aspect, in a possible implementation, the production material data further includes: a proportion of a purchased cathode raw material in the element i of all cathode raw materials used in production of a self-produced cathode material, a proportion of a recycled material in the element i of the purchased cathode raw material, and a proportion of a self-produced cathode raw material in the element i of all the cathode raw materials used in the production of the self-produced cathode material;

a proportion of the recycled material in the element i of the self-produced cathode material is obtained according to the production material data, a proportion of a recycled material in the element i of the self-produced cathode raw material, and a preset element-i recycled material proportion calculation formula for the self-produced cathode material; and all the cathode raw materials used in the production of the self-produced cathode material include the self-produced cathode raw material and the purchased cathode raw material.

With reference to the first aspect, in a possible implementation, the element-i recycled material proportion calculation formula for the self-produced cathode material is:

$$R_{Ci} = R_{Pi} * (1 - x_i) + R_{Wi} * x_i,$$

where $x_i$ is the proportion of the purchased cathode raw material in the element i of all the cathode raw materials used in the production of the self-produced cathode material, measured in %; $(1 - x_i)$ is the proportion of the self-produced cathode raw material in the element i of all the cathode raw materials used in the production of the self-produced cathode material, measured in %; $R_{Wi}$ is the proportion of the recycled material in the element i of the purchased cathode raw material, measured in %; $R_{Pi}$ is the proportion of the recycled material in the element i of the self-produced cathode raw material, measured in %; and $R_{Ci}$ is the proportion of the recycled material in the element i of the self-produced cathode material, measured in %.

With reference to the first aspect, in a possible implementation, the production material data further includes: the mass of the element i in the purchased cathode raw material used in the production of the self-produced cathode material and the mass of the element i in the self-produced cathode raw material used in the production of the self-produced cathode material; and

the proportion of the purchased cathode raw material in the element i of all the cathode raw materials used in the production of the self-produced cathode material is expressed as:

$$x_i = \frac{m_{PSi}}{m_{Pi} + m_{PSi}},$$

where $m_{PSi}$ is the mass of the element i in the purchased cathode raw material used in the production of the self-produced cathode material, measured in kg; $m_{Pi}$ is the mass of the element i in the self-produced cathode raw material used in the production of the self-produced cathode material, measured in kg; and $x_i$ is the proportion of the purchased cathode raw material in the element i of all the cathode raw materials used in the production of the self-produced cathode material, measured in %.

With reference to the first aspect, in a possible implementation, the production material data further includes: the mass of the element i in the purchased cathode raw material used in the production of the self-produced cathode material, a recovery rate of the element i from all the self-produced cathode raw material to the self-produced cathode material, and the mass of the element i in the self-produced cathode material produced; and

the proportion of the purchased cathode raw material in the element i of all the cathode raw materials used in the production of the self-produced cathode material is expressed as:

$$X_i = \frac{m_{PSi} * v_{3i}}{m_{ECi}},$$

where $m_{PSi}$ is the mass of the element i in the purchased cathode raw material used in the production of the self-produced cathode material, measured in kg; $v_{3i}$ is the recovery rate of the element i from the self-produced cathode raw material to the self-produced cathode material, measured in %; and $m_{ECi}$ is the mass of the element i in the self-produced cathode material produced, measured in kg.

With reference to the first aspect, in a possible implementation, the production material data further includes: a proportion of a purchased cathode material in the element i of all cathode materials used in production of a battery, a proportion of a recycled material in the element i of the purchased cathode material, and a proportion of a self-produced cathode material in the element i of all the cathode materials used in the production of the battery;

a proportion of the recycled material in the element i of the battery is obtained according to the production material data, the proportion of the recycled material in the element i of the self-produced cathode material, and a preset element-i recycled material proportion calculation formula for the battery; and
all the cathode materials used in the production of the battery include the self-produced cathode material and the purchased cathode material.

With reference to the first aspect, in a possible implementation, the element-i recycled material proportion calculation formula for the battery is expressed as:

$$R_i = R_{Ci} * (1 - z_i) + R_{CSi} * z_i,$$

where $z_i$ is the proportion of the purchased cathode material in the element i of all the cathode materials used in the production of the battery, measured in %; $(1 - z_i)$ is the proportion of the self-produced cathode material in the element i of all the cathode materials used in the production of the battery, measured in %; $R_{CSi}$ is the proportion of the recycled material in the element i of the purchased cathode material, measured in %; $R_{Ci}$ is the proportion of the recycled material in the element i of the self-produced cathode material, measured in %; and $R_i$ is the proportion of the recycled material in the element i of the battery.

With reference to the first aspect, in a possible implementation, the production material data further includes: the mass of the element i in the purchased cathode material used in the production of the battery and the mass of the element i in the self-produced cathode material used in the production of the battery; and
the proportion of the purchased cathode material in the element i of all the cathode materials used in the production of the battery is expressed as:

$$z_i = \frac{m_{CSi}}{m_{Ci} + m_{CSi}},$$

where $m_{CSi}$ is the mass of the element i in the purchased cathode material used in the production of the battery, measured in kg; $m_{Ci}$ is the mass of the element i in the self-produced cathode material used in the production of the battery, measured in kg; and $z_i$ is the proportion of the purchased cathode material in the element i of all the cathode materials used in the production of the battery, measured in %.

With reference to the first aspect, in a possible implementation, the production material data further includes: the mass of the element i in the purchased cathode material used in the production of the battery, a recovery rate of the element i from all the cathode materials to the battery, and a mass of the element i in the battery produced; and
the proportion of the purchased cathode material in the element i of all the cathode materials used in the production of the battery is expressed as:

$$z_i = \frac{m_{CSi} * v_{4i}}{m_{Ei}},$$

where $m_{CSi}$ is the mass of the element i in the purchased cathode material used in the production of the battery, measured in kg; $v_{4i}$ is the recovery rate of the element i from all the cathode materials to the battery, measured in %; and $m_{Ei}$ is the mass of the element i in the battery produced, measured in kg.

With reference to the first aspect, in a possible implementation, the production material data further includes: a proportion of a recycled raw material j in the element i of the purchased cathode raw material and a proportion of recycled raw material j in the element i of the self-produced cathode raw material; j is a battery scrap or a process scrap;

a proportion of the recycled raw material j in the element i of the self-produced cathode material is obtained according to the production material data and a preset formula for calculating the proportion of the recycled raw material j in the element i of the self-produced cathode material; and
the formula for calculating the proportion of the recycled raw material j in the element i of the self-produced cathode material is:

$$R_{Cij} = R_{Pij} * (1 - x_i) + R_{Wij} * x_i,$$

where $x_i$ is the proportion of the purchased cathode raw material in the element i of all the cathode raw materials used in the production of the self-produced cathode material, measured in %; $(1 - x_i)$ is the proportion of the self-produced cathode raw material in the element i of all the cathode raw materials used in the production of the self-produced cathode material, measured in %; $R_{Wij}$ is the proportion of the recycled raw material j in the element i of the purchased cathode raw material, measured in %; $R_{Pij}$ is the proportion of the recycled raw material j in the element i of the self-produced cathode raw material, measured in %; and $R_{Cij}$ is the proportion of the recycled raw material j in the element i of the self-produced cathode material.

With reference to the first aspect, in a possible implementation, the production material data further includes: a proportion of a recycled raw material j in the element i of the purchased cathode material and a proportion of recycled raw material j in the element i of the self-produced cathode material; j is a battery scrap or a process scrap;

a formula for calculating a proportion of the recycled raw material j in the element i of the battery is expressed as:

$$R_{ij} = R_{Cij} * (1 - z_i) + R_{CSij} * z_i,$$

where $z_i$ is the proportion of the purchased cathode material in the element i of all the cathode materials used in the production of the battery, measured in %; $(1 - z_i)$ is the proportion of the self-produced cathode material in the element i of all the cathode materials used in the production of the battery, measured in %; $R_{CSij}$ is the proportion of the recycled raw material j in the element i of the purchased cathode material, measured in %; $R_{Cij}$ is the proportion of the recycled raw material j in the element i of the self-produced cathode material, measured in %; and $R_{ij}$ is the proportion of the recycled raw material j in the element i of the battery.

In accordance with a second aspect of the present disclosure, an embodiment provides an RMS-based recycled material tracing method, including:

tracing a recycled material by using barcode-based tracing, time-based tracing, and batch-based tracing (i.e., BTB tracing) based on the RMS-based recycled material proportion calculation method according to any one of the first aspect and the possible implementations of the first aspect,

where tracing a recycled material by using BTB tracing includes:
performing barcode-based tracing of the recycled material according to an operation prior to a leaching procedure in a production process, performing time-based tracing of the recycled material according to the leaching procedure, and performing batch-based tracing of the recycled material according to an operation after the leaching procedure.

In the present disclosure, by means of the RMS-based recycled material tracing method, different tracing means including barcode-based tracing, time-based tracing, and batch-based tracing are adopted to trace different production processes of batteries, cathode materials, and their production raw materials, to adapt to different production characteristics and scientifically and systematically trace the sources of recycled materials, thereby improving the tracing accuracy, reducing complex manual operations, centrally managing the tracing process, improving the accuracy of recycled material data, and improving the tracing efficiency.

With reference to the second aspect, in a possible implementation, comprising:

the barcode-based tracing includes: generating a code for each battery scrap, process scrap, black mass, or purchased material, where the code includes element composition information, element weight information, and recycled material proportion information; and entering the code into a system;

the time-based tracing includes: labeling a self-produced salt and a purchased salt according to a time period and generating a time period code corresponding to the self-produced salt and a time period code corresponding to the purchased salt, where the time period code includes element composition information, element weight information, and recycled material proportion information corresponding to the time period; and entering the time period codes into a system; and

the batch-based tracing includes: generating a batch code for each batch of self-produced cathode raw materials, each batch of purchased cathode raw materials, each batch of self-produced cathode materials, each batch of purchased cathode materials, or each batch of batteries, where the batch code includes element composition information, element weight information, and recycled material proportion information; and entering the batch code into a system.

With reference to the second aspect, in a possible implementation, including:

generating a purchased commodity traceability code for a purchased commodity, where the purchased commodity traceability code includes a purchased commodity information code and information of raw materials used in production of the purchased commodity, and entering the purchased commodity traceability code into a system, where

the purchased commodity is a purchased material, a purchased salt, a purchased cathode raw material, or a purchased cathode material;

the purchased commodity information code is a purchased material code, a purchased salt time period code, a purchased cathode raw material batch code, or a purchased cathode material batch code;

the information of the raw materials used in the production of the purchased commodity includes a traceability code and usage amount information of each of the raw materials used in the production of the purchased commodity; and

the purchased commodity traceability code is a purchased material traceability code, a purchased salt traceability code, a purchased cathode raw material traceability code, or a purchased cathode material traceability code.

With reference to the second aspect, in a possible implementation, including:

after producing a self-produced product according to a processing process on the production line, generating a self-produced product traceability code for the self-produced product according to the processing process, where the self-produced product traceability code includes a self-produced product information code and information of raw materials used in the production of the self-produced product, and entering the self-produced product traceability code into a system, where

the self-produced product is a black mass, a self-produced salt, a self-produced cathode raw material, a self-produced cathode material, or a battery;

the self-produced product information code is a battery scrap code, a process scrap code, a black mass code, a purchased material code, a self-produced salt time period code, a purchased salt time period code, a self-produced cathode raw material batch code, a purchased cathode raw material batch code, a self-produced cathode material batch code, a purchased cathode material batch code, or a battery batch code; and

the information of the raw materials used in the production of the self-produced product includes a traceability code and usage amount information of each of the raw materials used in the production of the self-produced product.

With reference to the second aspect, in a possible implementation, including:

determining the self-produced product for which recycled material proportion calculation or recycled material tracing is to be performed;

acquiring a traceability code of the self-produced product; and

acquiring proportion information and source information of a recycled material in the self-produced product according to the traceability code of the self-produced product.

In accordance with a third aspect of the present disclosure, an embodiment provides an RMS-based recycled material proportion calculation apparatus, including: a data collection unit and a recycled material proportion calculation unit, where
the data collection unit is configured for acquiring production material data used in the RMS-based recycled material proportion calculation method of any one of the first aspect and the possible implementations of the first aspect in a preset collection period; and the recycled material proportion calculation unit is configured for calculating a proportion of a recycled material by using a calculation formula in the RMS-based recycled material proportion calculation method of any one of the first aspect and the possible implementations of the first aspect according to the production material data collected by the data collection unit.

In accordance with a fourth aspect of the present disclosure, an embodiment provides an RMS-based recycled material tracing apparatus, including:
a tracing unit, configured for tracing a recycled material based on the RMS-based recycled material tracing method of any one of the second aspect and the possible implementations of the second aspect.

In accordance with a fifth aspect of the present disclosure, an embodiment provides an electronic device, including: one or more processors; and a memory, storing one or more programs which, when executed by the one or more processors, cause the one or more processors to implement the steps of the RMS-based recycled material proportion calculation method of any one of the first aspect and the possible implementations of the first aspect or the steps of the RMS-based recycled material tracing method of any one of the second aspect and the possible implementations of the second aspect.

In the present disclosure, when the RMS-based recycled material proportion calculation method of any one of the first aspect and the possible implementations of the first aspect or the RMS-based recycled material tracing method according to the second aspect and the possible implementation mode thereof is respectively integrated on an electronic device, the electronic device can implement rapidly on-site recycled material proportion tracing and on-site recycled material proportion calculation and tracing feedback, so that higher scalability is achieved.

In accordance with a sixth aspect of the present disclosure, an embodiment provides a computer-readable storage medium, having a computer program stored therein, where the computer program, when executed by a processor, causes the processor to implement the steps of the RMS-based recycled material proportion calculation method of any one of the first aspect and the possible implementations of the first aspect or the steps of the RMS-based recycled material tracing method of any one of the second aspect and the possible implementations of the second aspect.

In the present disclosure, when the RMS-based recycled material proportion calculation method according to any one of the first aspect and the possible implementations of the first aspect or the RMS-based recycled material tracing method according to any one of the second aspect and the possible implementations of the second aspect are respectively stored in the storage medium in the form of programs, operations such as quick calculation of the proportion of recycled materials and on-site tracing of the recycled materials can be performed by running or reading the executable programs in the storage medium. Therefore, the schemes of the present disclosure have high scalability and can be applied to more operating systems and different application platforms.

**BRIEF DESCRIPTION OF DRAWINGS**

FIG. 1 is a schematic flowchart of an RMS-based recycled material proportion calculation method according to an embodiment of the present disclosure;

FIG. 2 is a process flowchart of an RMS-based recycled material proportion calculation method and tracing method according to an embodiment of the present disclosure;

FIG. 3 is a diagram showing battery production using an RMS-based recycled material proportion calculation method according to an embodiment of the present disclosure;

FIG. 4 is a schematic structural diagram of an RMS-based recycled material proportion calculation apparatus according to an embodiment of the present disclosure; and

FIG. 5 is a schematic diagram of an electronic device according to an embodiment of the present disclosure.

## DETAILED DESCRIPTION

The technical schemes in the embodiments of the present disclosure are clearly and completely described in the following with reference to the accompanying drawings in the embodiments of the present disclosure. Apparently, the described embodiments are merely some rather than all of the embodiments of the present disclosure. All other embodiments obtained by a person of ordinary skill in the art based on the embodiments of the present disclosure without making creative efforts shall fall within the protection scope of the present disclosure.

It should be noted that since the production process of batteries and their cathode materials is complex and involves a variety of raw material sources, there is currently a lack of a method that can scientifically and systematically calculate the proportion of recycled materials in batteries, cathode materials, and production raw materials, and recycled materials in batteries, cathode materials, and production raw materials cannot be traced. Based on this, the present disclosure provides an RMS-based recycled material proportion calculation method and a tracing method, an apparatus, a device, and a storage medium, which can scientifically and systematically calculate the proportions of recycled materials in batteries, cathode materials, and production raw materials and trace the recycled materials. To better illustrate the technical scheme of the present disclosure, the following embodiments will be described below.

Some technical terms are explained below, and technical terms that are not explained herein are subject to the conventional understanding of those skilled in the art.

The present disclosure provides a set of standards for recycled material proportion calculation and tracing, including a variety of methods for calculating proportions of recycled materials in batteries, cathode materials, production raw materials, etc. and tracing the recycled materials. For convenience of description, in the present disclosure, the set of standards for recycled material proportion calculation and tracing is briefly referred to as Recycled Material Standard (RMS).

Recycled raw materials are renewable raw materials, which are various raw materials that can be processed to regain their use value. Recycled raw materials include battery scraps and other wastes. A recycled material is a material with use value obtained by processing a recycled raw material. The black mass is a black powdery substance obtained by crushing the recycled raw material.

A self-produced salt refers to a self-prepared salt. A purchased salt refers to a salt purchased from an external supplier. The self-produced salt and the purchased salt are the same substance, which may be nickel sulfate, cobalt sulfate, manganese sulfate, lithium sulfate, aluminum nitrate, ammonium dihydrogen phosphate, ferrous sulfate, or the like. A self-produced cathode raw material is a self-prepared cathode raw material. A purchased cathode raw material is a cathode raw materials purchased from an external supplier. The self-produced cathode raw material and the purchased cathode raw material are the same substance and may be a precursor or lithium salt for producing a cathode material. The precursor may be nickel cobalt manganese hydroxide, nickel cobalt aluminum hydroxide, iron phosphate, a ferromanganese mixed metal salt, manganese carbonate, cobalt tetroxide, or the like. The lithium salt may be lithium carbonate, lithium hydroxide, or the like. A self-produced cathode material is a self-prepared cathode material. A purchased cathode material is a cathode material purchased from an external supplier. The self-produced cathode material and the purchased cathode material are the same, and may be lithium nickel cobalt manganese oxide, lithium nickel cobalt aluminate, lithium iron phosphate, lithium manganese iron phosphate, lithium manganate, lithium cobaltate, lithium-rich manganese oxide, or the like.

Example 1

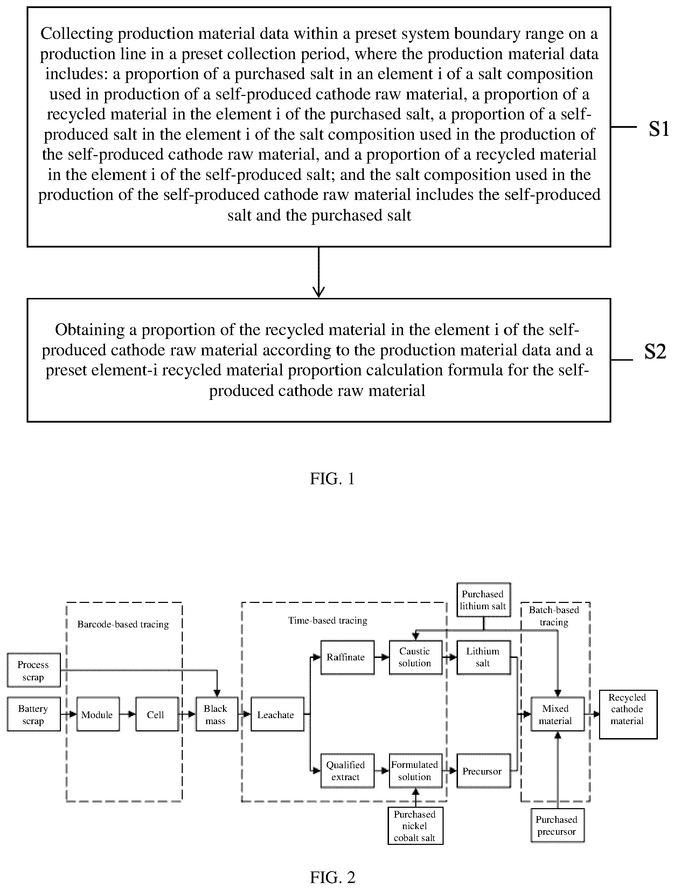

FIG. 1 is a schematic flowchart of an RMS-based recycled material proportion calculation method according to an embodiment of the present disclosure, which includes the following steps S11 to S12.

At step S11, production material data within a preset system boundary range on a production line is collected in a preset collection period, where the production material data includes: a proportion of a purchased salt in an element i of a salt composition used in production of a self-produced cathode raw material, a proportion of a recycled material in the element i of the purchased salt, a proportion of a self-produced salt in the element i of the salt composition used in the production of the self-produced cathode raw material, and a proportion of a recycled material in the element i of the self-produced salt; and the salt composition used in the production of the self-produced cathode raw material consists of the self-produced salt and the purchased salt. The self-produced cathode raw material is a compound containing the element i; and the element i is any one of nickel, cobalt, manganese, aluminum, iron, phosphorus, or lithium.

At step S12, a proportion of the recycled material in the element i of the self-produced cathode raw material is obtained according to the production material data and a preset element-i recycled material proportion calculation formula for the self-produced cathode raw material.

It should be noted that production lines of different length are deployed depending on the sizes of different plants, and the production line may be an entirety or part of a production line for producing batteries, cathode materials, precursors, lithium salts, self-produced salts, or black mass. According to recycled material proportion calculation requirements of different products, production material data on the corresponding production line is collected.

In some embodiments of the present disclosure, on a production line from black mass to salt solution, generally, a certain amount of purchased material is added for formulation in the process of forming the salt solution from the black mass as needed. In other words, the black mass and the purchased material are used in the process of forming the salt solution. The black mass is generally a black powdery substance obtained by crushing a recycled raw material, i.e., the proportion of recycled materials in the black mass is 100%.

In some embodiments of the present disclosure, on a production line from salt to cathode raw material, a certain amount of purchased salt is generally added to a self-produced salt as needed for formulation to produce a self-produced cathode raw material. In other words, the self-produced salt and the purchased salt are used in the production of the self-produced cathode raw material. A self-produced salt refers to a self-prepared salt. A purchased salt refers to a salt purchased from an external supplier. The self-produced salt and the purchased salt are the same substance, which may be nickel sulfate, cobalt sulfate, manganese sulfate, lithium sulfate, aluminum nitrate, ammonium dihydrogen phosphate, ferrous sulfate, or the like. A self-produced cathode raw material is a self-prepared cathode raw material. A purchased cathode raw material is a cathode raw materials purchased from an external supplier. The self-produced cathode raw material and the purchased cathode raw material are the same substance and may be a precursor or lithium salt for producing a cathode material. The precursor may be nickel cobalt manganese hydroxide, nickel cobalt aluminum hydroxide, iron phosphate, manganese carbonate, cobalt tetroxide, or the like. The lithium salt may be lithium carbonate, lithium hydroxide, or the like.

In some embodiments of the present disclosure, on a production line from cathode raw material to cathode material, a certain amount of purchased cathode raw material is generally added to a self-produced cathode raw material as needed for formulation to produce a self-produced cathode material. In other words, the self-produced cathode raw material and the purchased cathode raw material are used in the production of the self-produced cathode material. A self-produced cathode material is a self-prepared cathode material. A purchased cathode material is a cathode material purchased from an external supplier. The self-produced cathode material and the purchased cathode material are the same, and may be lithium nickel cobalt manganese oxide, lithium nickel cobalt aluminate, lithium iron phosphate, lithium manganate, lithium cobaltate, lithium-rich manganese oxide, or the like. In some embodiments of the present disclosure, on a production line from cathode material to battery, a certain amount of purchased cathode material is generally added to a self-produced cathode material as needed for formulation to produce a battery. In other words, the raw materials of the battery are the self-produced cathode material and the purchased cathode material.

In some embodiments of the present disclosure, recovering the element i from a battery scrap to generate a cathode material includes: extracting the element i of the battery scrap to a leachate, then adding a purchased metal salt for extracting a precursor from the leachate, and adding a purchased coarse salt for extracting a lithium salt from the leachate; and mixing the extracted precursor and lithium salt with a purchased precursor and a refined salt to obtain a mixed material, and producing the cathode material from the mixed material. According to the above production processes of the precursor and the lithium salt, it can be seen that the production processes of the precursor and the lithium salt are similar, the time point at which raw materials are added in the production process of the precursor is similar to that in the production process of the lithium salt, and the precursor and the lithium salt are both generated by adding a purchased salt to the leachate. To build a recycled material calculation formula applicable to both the precursor and the lithium salt, a common name is given to the precursor and the lithium salt, for example, the precursor and the lithium salt are collectively referred to as a cathode raw material. Similarly, a common name is given to the purchased metal salt and the purchased coarse salt, for example, the purchased metal salt and the purchased coarse salt are collectively referred to as a purchased salt. For the sake of correspondence between the names of the materials, a common name is given to the leachate, for example, the leachate is referred to as a self-produced salt. The calculation formula using the new names can be used to calculate the proportion of recycled materials of each element in the precursor and the proportion of recycled materials of each element in the lithium salt, which is convenient and accurate.

In some embodiments of the present disclosure, adding a purchased salt for extracting a cathode raw material from the leachate includes: extracting the leachate, adding an additive to the qualified extract liquid to prepare a formulated solution, and adding the purchased salt to the formulated solution for reaction to extract the self-produced cathode raw material.

In some embodiments of the present disclosure, the purchased salt is at least one of a purchased lithium salt, a purchased nickel salt, a purchased cobalt salt, a purchased manganese salt, a purchased iron salt, or a purchased phosphorus salt.

In some embodiments of the present disclosure, FIG. 2 is a process flowchart of an RMS-based recycled material proportion calculation method and tracing method according to an embodiment of the present disclosure. Specifically, a module of a battery scrap is firstly obtained, and is then disassembled to obtain battery cells. This process is a process before the leaching process, where recycled materials can be traced by barcode-based tracing. The battery cells and process scrap are discharged, pyrolyzed, and crushed, and the black mass of the battery is obtained by sieving. The black mass of the battery is oxidized and leached to obtain a leachate.

In FIG. 2, during extraction of the precursor (i.e., self-produced cathode raw material) from the leachate, an additive is added to the qualified extract liquid obtained from the leachate to give a formulated solution; and a purchased nickel cobalt salt is added to the formulated solution for reaction to obtain the precursor (i.e., self-produced cathode raw material). The process of preparing the formulated solution from the leachate belongs to the leaching procedure, where recycled materials can be traced by time-based tracing. Then, the extracted lithium salt and precursor are mixed, followed by addition of a purchased refined salt (i.e., lithium salt, which is equivalent to the purchased cathode raw material) and addition of a purchased precursor (i.e., purchased cathode raw material) to obtain a mixed material, and through the reaction of the mixed material, an NCM ternary recycled cathode material composed of nickel (Ni), cobalt (Co), manganese (Mn) and lithium (Li) is prepared. The process of preparing the mixed material is a process after leaching, where recycled materials can be traced by batch-based tracing.

In FIG. 2, the lithium salt and the precursor (collectively referred to as the self-produced cathode raw material) can be extracted separately from the leachate. During the extraction of the lithium salt from the leachate, the leachate is extracted to obtain a raffinate; the raffinate is causticized to give a caustic solution; and a purchased coarse salt (i.e., purchased salt) is added to the caustic solution to fully extract the lithium salt from the caustic solution.

It should be noted that purchased lithium salt includes the purchased refined salt and the purchased coarse salt. The purchased coarse salt (i.e., purchased salt) is added during the extraction of the lithium salt. The purchased refined salt (i.e., purchased cathode material raw material) is added during calcination. The purchased metal salt in FIG. 2 includes a purchased nickel cobalt salt.

Finally, a self-produced cathode raw material is obtained from the lithium salt and the precursor. Then, the self-produced cathode raw material, the purchased refined lithium salt, and the purchased cathode raw material are mixed to obtain a self-produced cathode material. As such, the self-produced cathode material is recovered from the battery scrap, thus obtaining a recycled cathode material.

It should be noted that during the process of respectively extracting the lithium salt and the NCM recycled cathode material from the caustic solution and the mixed material, the failed lithium-containing compound is directly repaired according to the purchased lithium salt to restore the electrochemical performance of the lithium-containing compound. The restored compound can be reused as a recycled material. Similarly, the purchased nickel cobalt salt is added to the formulated solution, and the purchased precursor is added to the mixed material. After the self-produced cathode material is prepared based on an RMS, the proportion of recycled materials of each element in the battery scrap is calculated based on the self-produced cathode material, where the recycled materials include not only recycled raw materials in the battery scrap, but also recycled raw materials of the purchased lithium salt, the purchased nickel cobalt salt, and the purchased precursor. As such, an accurate proportion of recycled materials of each element based on the RMS can be calculated.

In some embodiments of the present disclosure, the RMS-based process in FIG. 2 is used for recycling to regenerate the NCM ternary recycled cathode material, or the RMS-based process in FIG. 2 is used for recycling to regenerate an NCA ternary recycled cathode material composed of nickel, cobalt, aluminum (Al), and lithium, to obtain the proportion of recycled materials in the NCM ternary recycled cathode material or the NCA ternary recycled cathode material.

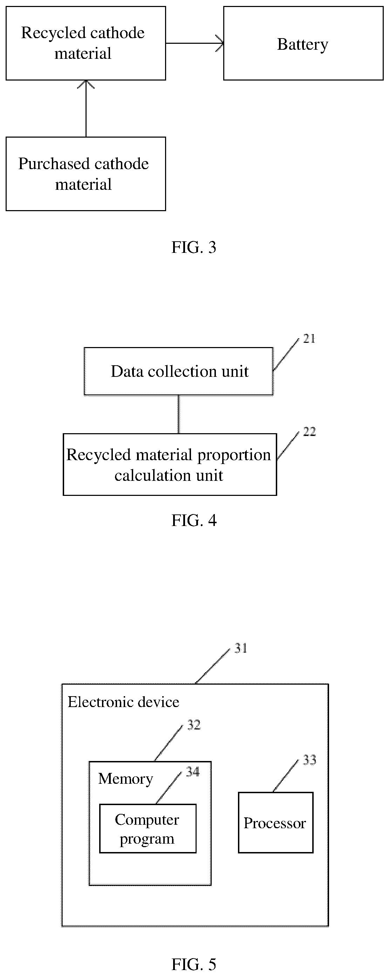

In some embodiments of the present disclosure, a battery production process is shown in FIG. 3. As shown in FIG. 3, on a production line from cathode material to battery, a certain amount of purchased cathode material is generally added to a self-produced cathode material as needed for formulation to produce a battery. In other words, the raw materials of the battery are the self-produced cathode material and the purchased cathode material.

According to the embodiments of the present disclosure, the cathode material is generated by recovering the element i from the battery scrap based on the RMS, and recycled materials are traced based on the RMS. Therefore, the cathode material can be produced using elements in the battery scrap, providing high applicability and practicability.

In some embodiments of the present disclosure, when a raw material of the self-produced salt includes only a recycled material, the proportion of the recycled material in the element i of the self-produced salt is 100%, and the element-i recycled material proportion calculation formula for the self-produced cathode raw material is:

$$R_{Pi} = R_{Mi} * y_i + (1 - y_i),$$

where $y_i$ is the proportion of the purchased salt in the element i of the salt composition used in the production of the self-produced cathode raw material, measured in %; $(1 - y_i)$ is the proportion of the self-produced salt in the element i of the salt composition used in the production of the self-produced cathode raw material, measured in %; $R_{Mi}$ is the proportion of the recycled material in the element i of the purchased salt, measured in %; and $R_{Pi}$ is the proportion of the recycled material in the element i of the self-produced cathode raw material, measured in %.

It should be noted that the proportion of recycled materials in the element i of the purchased salt should be provided by the corresponding external supplier, and may be calculated by the external supplier by using the recycled material proportion calculation method provided in the present disclosure.

In some embodiments of the present disclosure, the production material data further includes: the mass of the element i in the purchased salt used in the production of the self-produced cathode raw material and the mass of the element i in the self-produced salt used in the production of the self-produced cathode raw material. The proportion of the purchased salt in the element i of the salt composition used in the production of the self-produced cathode raw material may be expressed as:

$$y_i = \frac{m_{MSRi}}{m_{MSRi} + m_{MRi}},$$

where $m_{MSRi}$ is the mass of the element i in the purchased salt used in the production of the self-produced cathode raw material, measured in kg; $m_{MRi}$ is the mass of the element i in the self-produced salt used in the production of the self-produced cathode raw material, measured in kg; and $y_i$ is the proportion of the purchased salt in the element i of the salt composition used in the production of the self-produced cathode raw material, measured in %.

For example, it is necessary to calculate a proportion of recycled materials in the element nickel of the precursor, e.g., a proportion of recycled materials in the element nickel of nickel cobalt manganese hydroxide, i.e., the self-produced cathode raw material is nickel cobalt manganese hydroxide, and the element i is nickel. In this case, corresponding production material data on a production line for producing the nickel cobalt manganese hydroxide is collected. The mass of the element nickel of the self-produced salt used is collected. For example, the mass of the element nickel of self-produced nickel sulfate is 433 kg. The mass of the element nickel of the purchased salt used is collected. For example, the mass of the element nickel of purchased nickel sulfate is 276 kg. The proportion of recycled materials in the element nickel of the purchased salt is provided by the external supplier. For example, the proportion of recycled materials in the element nickel of the purchased nickel sulfate is 50%. When all the element nickel in the self-produced nickel sulfate are from recycled materials, i.e., the proportion of recycled materials in the element nickel of the self-produced salt is 100%, the element-i recycled material proportion calculation formula for the self-produced cathode raw material is:

$$R_{Pi} = R_{Mi} * \frac{m_{MSRi}}{m_{MSRi} + m_{MRi}} + \frac{m_{MRi}}{m_{MSRi} + m_{MRi}}$$

$$= 0.5 * \frac{276}{276 + 433} + \frac{433}{276 + 433} = 80.6\%.$$

Based on the above formula, a proportion of recycled materials in the element nickel of a precursor of a ternary lithium-ion battery cathode material can be calculated. Similarly, the proportion of recycled materials of the element i in other self-produced cathode raw materials can be calculated using the same method.

In addition, the production material data further includes: the mass of the element i in the purchased salt used in the production of the self-produced cathode raw material, a recovery rate of the element i from the salt composition to the self-produced cathode raw material, the mass of the element i in a black mass used in production of the self-produced salt, a recovery rate of the element i from the black mass to the self-produced salt, and the mass of the element i in the self-produced cathode raw material produced.

The proportion of the purchased salt in the element i of the salt composition used in the production of the self-produced cathode raw material may also be expressed as:

$$y_i = \frac{m_{MSRi} * v_{2i}}{m_{EPi}}$$

where $m_{MSRi}$ is the mass of the element i in the purchased salt used in the production of the self-produced cathode raw material, measured in kg; $v_{2i}$ is the recovery rate of the element i from the salt composition to the self-produced cathode raw material, measured in %; and $m_{EPi}$ is the mass of the element i in the self-produced cathode raw material produced, measured in kg.

The proportion of the self-produced salt in the element i of the salt composition used in the production of the self-produced cathode raw material may be expressed as:

$$(1 - y_i) = \frac{m_{Bi} * v_{1i} * v_{2i}}{m_{EPi}}$$

where $m_{Bi}$ is the mass of the element i in the black mass used in the production of the self-produced salt, measured in kg;

and $v_{1i}$ is the recovery rate of the element i from the black mass to the self-produced salt, measured in %.

For example, values of $v_{1i}$ and $v_{2i}$ may be obtained in various manners, and it is recommended to obtain such values by a conventional method in the art. The values of $v_{1i}$ and $v_{2i}$ may be measured in an experiment, or may be obtained by averaging the results of multiple experiments.

When the proportion of the recycled material in the element i of the self-produced salt is not set to 100%, the element-i recycled material proportion calculation formula for the self-produced cathode raw material is:

$$R_{Pi} = R_{Mi} * y_i + R_{MBi} * (1 - y_i),$$

where $y_i$ is the proportion of the purchased salt in the element i of the salt composition used in the production of the self-produced cathode raw material, measured in %; $(1 - y_i)$ is the proportion of the self-produced salt in the element i of the salt composition used in the production of the self-produced cathode raw material, measured in %; $R_{Mi}$ is the proportion of the recycled material in the element i of the purchased salt, measured in %; $R_{MBi}$ is the proportion of the recycled material in the element i of the self-produced salt, measured in %; and $R_{Pi}$ is the proportion of the recycled material in the element i of the self-produced cathode raw material, measured in %.

Considering that sometimes the raw materials used for producing the self-produced salt are not all recycled materials or recycled raw materials, i.e., may include a primary mineral materials, a parameter $R_{MBi}$ is introduced as the proportion of recycled materials in the element i of the self-produced salt, thereby further expanding the range of application of the element-i recycled material proportion calculation formula for the cathode raw material and improving the accuracy of recycled material proportion calculation.

Correspondingly, the proportion of the purchased salt in the element i of the salt composition used in the production of the self-produced cathode raw material may be expressed as:

$$y_i = \frac{m_{MSRi}}{m_{MSRi} + m_{MRi}},$$

where $m_{MSRi}$ is the mass of the element i in a purchased salt used in production of a self-produced precursor, measured in kg; $m_{MRi}$ is the mass of the element i in a self-produced salt used in the production of the self-produced precursor, measured in kg; and $y_i$ is the proportion of the purchased salt in the element i of the salt composition used in the production of the self-produced precursor, measured in %.

The proportion of the purchased salt in the element i of the salt composition used in the production of the self-produced cathode raw material may be expressed as:

$$y_i = \frac{m_{MSRi} * v_{2i}}{m_{EPi}}$$

where $m_{MSRi}$ is the mass of the element i in the purchased salt used in the production of the self-produced cathode raw material, measured in kg; $v_{2i}$ is the recovery rate of the element i from the salt composition to the self-produced cathode raw material, measured in %; and $m_{EPi}$ is the mass of the element i in the self-produced cathode raw material produced, measured in kg.

The proportion of the self-produced salt in the element i of the salt composition used in the production of the self-produced cathode raw material may be expressed as:

$$(1 - y_i) = \frac{(m_{Bi} + m_{MSCi}) * v_{1i} * v_{2i}}{m_{EPi}}$$

where $m_{Bi}$ is the mass of the element i in the black mass used in the production of the self-produced salt, measured in kg; and $m_{MSCi}$ is the mass of the element i in the purchased material used in the production of the self-produced salt, measured in kg; and $v_{1i}$ is the recovery rate of the element i from the black mass to the self-produced salt, measured in %.

The mass $m_{EPi}$ of the element i in the self-produced cathode raw material produced is actually the mass of the element i in the self-produced cathode raw material obtained in the process from the black mass to the self-produced salt to the self-produced cathode raw material.

In the production process, the production material data further includes: the mass of the element i in the black mass used in the production of the self-produced salt, the mass of the element i in the purchased material used in the production of the self-produced salt, and a proportion of a recycled material in element i in the purchased material.

The proportion of the recycled material in the element i of the self-produced salt may be expressed as:

$$R_{MBi} = \frac{m_{Bi} + m_{MSCi} * R_{MSCi}}{m_{Bi} + m_{MSCi}},$$

where $m_{Bi}$ is the mass of the element i in the black mass used in the production of the self-produced salt, measured in kg; $m_{MSCi}$ is the mass of the element i in the purchased material used in the production of the self-produced salt, measured in kg; $R_{MSCi}$ is the proportion of the recycled material in the element i of the purchased material, measured in %; and $R_{MBi}$ is the proportion of the recycled material in the element i of the self-produced salt, measured in %.

For example, it is necessary to calculate a proportion of recycled materials in the element lithium of the precursor, e.g., a proportion of recycled materials in the element lithium of lithium carbonate, i.e., the self-produced cathode raw material is lithium carbonate, and the element i is lithium. In this case, corresponding production material data on a production line for producing the lithium carbonate is collected. The mass of the element lithium of the self-produced salt used is collected. For example, the mass of the element lithium of self-produced lithium sulfate is 113 kg. The mass of the element lithium of the purchased salt used is collected. For example, the mass of the element lithium of purchased lithium sulfate is 80 kg. The proportion of recycled materials in the element lithium of the purchased salt is provided by the external supplier. For example, the proportion of recycled materials in the element lithium of the purchased lithium sulfate is 60%. In addition, corresponding production material data in production of the self-produced salt is collected, i.e., corresponding production material data in production of the self-produced lithium sulfate is collected. The mass of the element i in the black mass used is collected. For example, the mass of lithium element in the black mass is 330 kg. The mass of the element i in the purchased material used is collected. For example, the mass of the element lithium in the purchased material is 40 kg. The proportion of recycled materials in the element i in the purchased material is collected. For example, the proportion of recycled materials in the element lithium in the purchased material is 50%. The preset element-i recycled material proportion calculation formula for the self-produced cathode raw material is:

$$R_{Pi} = R_{Mi} * \frac{m_{MSRi}}{m_{MSRi} + m_{MRi}} + \frac{m_{MRi}}{m_{MSRi} + m_{MRi}} * (\frac{m_{Bi} + m_{MSCi} * R_{MSCi}}{m_{Bi} + m_{MSCi}})$$

$$= 0.6 * \frac{80}{80+113} + \frac{113}{80+113} * (\frac{330+40*0.5}{330+40}) = 80.2\%.$$

Based on the above formula, a proportion of recycled materials in the element lithium of the lithium salt can be calculated. Similarly, the proportion of recycled materials of the element i in other self-produced cathode raw materials can be calculated using the same method.

It should be noted that all or part of the output of one process stage may be used in the next process stage, and corresponding raw material sources need to be flexibly determined according to the specific product to be produced. For example, in the process stage from black mass to salt, a black mass containing 330 kg of lithium element and a purchased material containing 40 kg of lithium element are added, giving a self-produced salt containing about 368.89 kg of lithium element. When the next process stage only needs a self-produced salt containing 113 kg of lithium element, the self-produced salt containing 113 kg of lithium element is taken from the output of the previous process stage.

In some embodiments of the present disclosure, the production material data further includes: a proportion of a purchased cathode raw material in the element i of all cathode raw materials used in production of a self-produced cathode material, a proportion of a recycled material in the element i of the purchased cathode raw material, and a proportion of a self-produced cathode raw material in the element i of all the cathode raw materials used in the production of the self-produced cathode material.

In addition, a proportion of the recycled material of the element i of the self-produced cathode material is obtained according to the production material data, a proportion of a recycled material in the element i of the self-produced cathode raw material, and a preset element-i recycled material proportion calculation formula for the self-produced cathode material. All the cathode raw materials used in the production of the self-produced cathode material include the self-produced cathode raw material and the purchased cathode raw material.

The preset element-i recycled material proportion calculation formula for the self-produced cathode material is:

$$R_{Ci} = R_{Pi} * (1 - x_i) + R_{Wi} * x_i,$$

where $x_i$ is the proportion of the purchased cathode raw material in the element i of all the cathode raw materials used in the production of the self-produced cathode material, measured in %; $(1 - x_i)$ is the proportion of the self-produced cathode raw material in the element i of all the cathode raw materials used in the production of the self-produced cathode material, measured in %; $R_{Wi}$ is the proportion of the recycled material in the element i of the purchased cathode raw material, measured in %. $R_{Pi}$ is the proportion of the recycled material in the element i of the self-produced cathode raw material, measured in %; and $R_{Ci}$ is the proportion of the recycled material in the element i of the self-produced cathode material, measured in %.

Based on the element-i recycled material proportion calculation formula for the self-produced cathode raw material, another expression form of the element-i recycled material proportion calculation formula for the self-produced cathode material may be obtained:

$$R_{Ci} = (R_{Mi} * y_i + R_{MBi} * (1 - y_i)) * (1 - x_i) + R_{wi} * x_i$$

In some embodiments of the present disclosure, the production material data further includes: the mass of the element i in the purchased cathode raw material used in the production of the self-produced cathode material and the mass of the element i in the self-produced cathode raw material used in the production of the self-produced cathode material; and

the proportion of the purchased cathode raw material in the element i of all the cathode raw materials used in the production of the self-produced cathode material may be expressed as:

$$x_i = \frac{m_{PSi}}{m_{Pi} + m_{PSi}},$$

where $m_{PSi}$ is the mass of the element i in the purchased cathode raw material used in the production of the self-produced cathode material, measured in kg; $m_{Pi}$ is the mass of the element i in the self-produced cathode raw material used in the production of the self-produced cathode material, measured in kg; and $x_i$ is the proportion of the purchased cathode raw material in the element i of all the cathode raw materials used in the production of the self-produced cathode material, measured in %.

In some embodiments of the present disclosure, the production material data further includes: the mass of the element i in the purchased cathode raw material used in the production of the self-produced cathode material, a recovery rate of the element i from all the self-produced cathode raw material to the self-produced cathode material, and the mass of the element i in the self-produced cathode material produced; and

the proportion of the purchased cathode raw material in the element i of all the cathode raw materials used in the production of the self-produced cathode material may be expressed as:

$$x_i = \frac{m_{PSi} * v_{3i}}{m_{ECi}},$$

where $m_{PSi}$ is the mass of the element i in the purchased cathode raw material used in the production of the self-produced cathode material, measured in kg; $v_{3i}$ is the recovery rate of the element i from the self-produced cathode raw material to the self-produced cathode material, measured in %; and $m_{ECi}$ is the mass of the element i in the self-produced cathode material produced, measured in kg.

For example, the value of $v_{3i}$ may be obtained in various manners, and it is recommended to obtain the value by a conventional method in the art. The value of $v_{3i}$ may be measured in an experiment, or may be obtained by averaging the results of multiple experiments.

In some embodiments of the present disclosure, the production material data further includes: a proportion of a purchased cathode material in the element i of all cathode materials used in production of a battery, a proportion of a recycled material in the element i of the purchased cathode material, and a proportion of a self-produced cathode material in the element i of all the cathode materials used in the production of the battery;

a proportion of the recycled material in the element i of the battery is obtained according to the production material data, the proportion of the recycled material in the element i of the self-produced cathode material, and a preset element-i recycled material proportion calculation formula for the battery; and

all the cathode materials used in the production of the battery include the self-produced cathode material and the purchased cathode material.

The element-i recycled material proportion calculation formula for the battery may be expressed as:

$$R_i = R_{Ci} * (1 - z_i) + R_{CSi} * z_i,$$

where $z_i$ is the proportion of the purchased cathode material in the element i of all the cathode materials used in the production of the battery, measured in %; $(1 - z_i)$ is the proportion of the self-produced cathode material in the element i of all the cathode materials used in the production of the battery, measured in %; $R_{CSi}$ is the proportion of the recycled material in the element i of the purchased cathode material, measured in %; $R_{Ci}$ is the proportion of the recycled material in the element i of the self-produced cathode material, measured in %; and $R_i$ is the proportion of the recycled material in the element i of the battery.

In some embodiments of the present disclosure, the production material data further includes: the mass of the element i in the purchased cathode material used in the production of the battery and the mass of the element i in the self-produced cathode material used in the production of the battery; and

the proportion of the purchased cathode material in the element i of all the cathode materials used in the production of the battery may be expressed as:

$$z_i = \frac{m_{CSi}}{m_{Ci} + m_{CSi}},$$

where $m_{CSi}$ is the mass of the element i in the purchased cathode material used in the production of the battery, measured in kg; $m_{Ci}$ is the mass of the element i in the self-produced cathode material used in the production of the battery, measured in kg; and $z_i$ is the proportion of the purchased cathode material in the element i of all the cathode materials used in the production of the battery, measured in %.

In some embodiments of the present disclosure, the production material data further includes: the mass of the element i in the purchased cathode material used in the production of the battery, a recovery rate of the element i from all the cathode materials to the battery, and the mass of the element i in the battery produced; and

the proportion of the purchased cathode material in the element i of all the cathode materials used in the production of the battery may be expressed as:

$$z_i = \frac{m_{CSi} * v_{4i}}{m_{Ei}},$$

where $m_{CSi}$ is the mass of the element i in the purchased cathode material used in the production of the battery, measured in kg; $v_{4i}$ is the recovery rate of the element i from all the cathode materials to the battery, measured in %; and $m_{Ei}$ is the mass of the element i in the battery produced, measured in kg.

For example, the value of $v_{4i}$ may be obtained in various manners, and it is recommended to obtain the value by a conventional method in the art. The value of $v_{4i}$ may be measured in an experiment, or may be obtained by averaging the results of multiple experiments.

According to the above formula, the following formula may further be obtained:

$$1 - z_i = \frac{m_{Ci} * v_{4i}}{m_{Ei}}$$

where $m_{Ci}$ is the mass of the element i in the self-produced cathode material used in the production of the battery, measured in kg.

Therefore, the element-i recycled material proportion calculation formula for the battery may also be expressed as:

$$R_i = \frac{m_{Ci} * R_{Ci} + m_{CSi} * R_{CSi}}{m_{Ci} + m_{CSi}}.$$

In some embodiments of the present disclosure, the production material data further includes: a proportion of a recycled raw material j in the element i of the purchased cathode raw material and a proportion of recycled raw material j in the element i of the self-produced cathode raw material; j is a battery scrap or a process scrap; and

a proportion of the recycled raw material j in the element i of the self-produced cathode material is obtained according to the production material data and a preset formula for calculating the proportion of the recycled raw material j in the element i of the self-produced cathode material.

Based on the formula for calculating the proportion of the recycled raw material j in the element i of the self-produced cathode material, a formula for calculating a proportion of the recycled raw material j in the element i of the battery, the following may be obtained:

The formula for calculating the proportion of the recycled raw material j in the element i of the self-produced cathode material is:

$$R_{Cij} = R_{Pij} * (1 - x_i) + R_{Wij} * x_i,$$

where $x_i$ is the proportion of the purchased cathode raw material in the element i of all the cathode raw materials used in the production of the self-produced cathode material, measured in %; $(1 - x_i)$ is the proportion of the self-produced cathode raw material in the element i of all the cathode raw materials used in the production of the self-produced cathode material, measured in %; $R_{Wij}$ is the proportion of the recycled raw material j in the element i of the purchased cathode raw material, measured in %; $R_{Pij}$ is the proportion of the recycled raw material j in the element i of the self-produced cathode raw material, measured in %; and $R_{Cij}$ is the proportion of the recycled raw material j in the element i of the self-produced cathode material.

In some embodiments of the present disclosure, the production material data further includes: a proportion of a recycled raw material j in the element i of the purchased cathode material and a proportion of recycled raw material j in the element i of the self-produced cathode material; j is a battery scrap or a process scrap; and

a formula for calculating a proportion of the recycled raw material j in the element i of the battery may be expressed as:

$$R_{ij} = R_{Cij} * (1 - z_i) + R_{CSij} * z_i,$$

where $z_i$ is the proportion of the purchased cathode material in the element i of all the cathode materials used in the production of the battery, measured in %; $(1 - z_i)$ is the proportion of the self-produced cathode material in the element i of all the cathode materials used in the production of the battery, measured in %; $R_{CSij}$ is the proportion of the recycled raw material j in the element i of the purchased cathode material, measured in %; $R_{Cij}$ is the proportion of the recycled raw material j in the element i of the self-produced cathode material, measured in %; and $R_{ij}$ is the proportion of the recycled raw material j in the element i of the battery.

In some embodiments of the present disclosure, when the proportion of the recycled raw material in the element i of the self-produced cathode material is acquired, a nickel-containing recycled raw material includes at least one of a nickel-containing battery waste, a pure nickel waste, a nickel alloy waste, a waste nickel powder, a nickel salt waste, nickel sludge, a nickel-containing catalyst waste, nickel-containing slag, and the like.

In some embodiments of the present disclosure, when the proportion of the recycled raw material in the element i of the self-produced cathode material is acquired, a cobalt-containing recycled raw material includes at least one of a cobalt-containing battery waste, a pure cobalt waste, a cobalt alloy waste, a cobalt salt waste, a cobalt-containing catalyst waste, a cobalt slag waste, and the like.

In some embodiments of the present disclosure, when the proportion of the recycled raw material in the element i of the self-produced cathode material is acquired, a lithium-containing recycled raw material includes: ① a lithium-containing battery waste, including at least one of a lithium-containing battery scrap and a recycled lithium battery cathode material waste such as lithium cobaltate, lithium nickel cobalt manganese oxide, lithium iron phosphate, lithium manganate, lithium nickel cobalt aluminate, or lithium nickel oxide generated in the production process of lithium batteries, and at least one of an electrolyte material such as lithium hexafluorophosphate or a anode material waste such as lithium titanate; ② a lithium salt waste, including at least one of waste materials such as lithium carbonate, lithium hydroxide monohydrate, lithium bromide, lithium fluoride, lithium chloride, or metallic lithium; and ③ other lithium-containing wastes, including at least one of lithium-containing slag left in the ore smelting process, lithium-containing alloy, or the like.

In some embodiments of the present disclosure, when the proportion of the recycled raw material in the element i of the self-produced cathode material is acquired, a manganese-containing recycled raw material includes at least one of a manganese-containing battery waste, a manganese alloy waste, a manganese salt waste, nickel sludge, manganese ore waste residue, manganese oxide slag, chemical manganese sludge, and the like.

In some embodiments of the present disclosure, when the proportion of the recycled raw material in the element i of the self-produced cathode material is acquired, a phosphorus-containing recycled raw material includes at least one of a phosphorus-containing battery waste, a phosphorus salt waste, phosphogypsum, phosphorus tailings, phosphorus fertilizer residue, phosphating residue, phosphorus sludge, and the like.

In some embodiments of the present disclosure, when the proportion of the recycled raw material in the element i of the self-produced cathode material is acquired, an iron-containing recycled raw material includes at least one of an iron-containing battery scrap, a pure iron waste, an iron salt waste, automobile dismantling scrap, an alloy steel waste, a cast iron waste, and the like.

It should be noted that sources of recycled raw materials include the battery scrap and the process scrap, and the source of the recycled raw materials in the battery scrap is post-consumer waste of the battery. Sources of recycled raw materials further include waste materials containing any one of nickel, cobalt, manganese, aluminum, iron, phosphorus, or lithium, e.g., waste materials produced in production or daily life.

In the embodiments of the present disclosure, the proportion of recycled materials of each element in the purchased salt, the ratio of the addition amount of the purchased salt corresponding to the element in the whole process to the total addition amount of raw material metal of the corresponding element, the ratio of the corresponding purchased materials added into the black mass, the metal recovery rate of recovering the self-produced cathode raw material from the black mass, and the purchase rate, so as to obtain clearer production material data, thereby providing a clearer calculation process, improving the accuracy and credibility of calculation of the proportion of recycled materials in the electrode material, and facilitating accurate tracing of the proportion of the recycled materials.

In the embodiments of the present disclosure, production material data is collected in the process of producing the cathode material, and an accurate proportion of recycled materials can be obtained according to the production material data and a preset recycled material proportion calculation formula, thereby improving the efficiency of recycling supervision.

In the embodiments of the present disclosure, in the process of preparing the self-produced cathode material, production material data is collected, and the recycled material proportion of each element is obtained according to the preset recycled material proportion calculation formula. As such, an accurate proportion of recycled materials can be calculated, thereby improving the recycling efficiency and providing a technique for calculating the proportion of recycled materials in a battery for the recycling industry chain.

Example 2

This example provides an RMS-based recycled material tracing method, including: tracing a recycled material by using BTB tracing based on the RMS-based recycled material proportion calculation method of Example 1.

It should be noted that due to the complex production process of batteries and cathode materials and the involvement of multiple raw material sources, there is still no mature technique for tracing recycled materials in the entire supply chain, making it difficult for regulatory authorities and the industry to trace recycled materials. Based on this, the present disclosure provides an RMS-based recycled material tracing method to implement automatic tracing for different processing processes by barcode-based tracing, time-based tracing, and batch-based tracing, thereby improving the tracing accuracy, reducing complex manual operations, centrally managing the tracing process, improving the accuracy of recycled material tracing data, and improving the tracing efficiency.

In some embodiments, tracing a recycled material by using BTB tracing includes: performing barcode-based tracing of the recycled material according to an operation prior to a leaching procedure in an RMS-based process, performing time-based tracing of the recycled material according to the leaching procedure, and performing batch-based tracing of the recycled material according to an operation after the leaching procedure.

In some embodiments, when tracing a recycled material by using BTB tracing, the barcode-based tracing includes: generating a code for each battery scrap, process scrap, black mass, or purchased material, where the code includes element composition information, element weight information, and recycled material proportion information; and entering the code into a system; the time-based tracing includes: labeling a self-produced salt and a purchased salt according to a time period and generating a time period code corresponding to the self-produced salt and a time period code corresponding to the purchased salt, where the time period code includes element composition information, element weight information, and recycled material proportion information corresponding to the time period; and entering the time period codes into a system; and the batch-based tracing includes: generating a batch code for each batch of self-produced cathode raw materials, each batch of purchased cathode raw materials, each batch of self-produced cathode materials, each batch of purchased cathode materials, or each batch of batteries, where the batch code includes element composition information, element weight information, and recycled material proportion information; and entering the batch code into a system.

In some embodiments, tracing a recycled material by using BTB tracing includes: generating a purchased commodity traceability code for a purchased commodity, where the purchased commodity traceability code includes a purchased commodity information code and information of raw materials used in production of the purchased commodity, and entering the purchased commodity traceability code into a system, where the purchased commodity is a purchased material, a purchased salt, a purchased cathode raw material, or a purchased cathode material; the purchased commodity information code is a purchased material code, a purchased salt time period code, a purchased cathode raw material batch code, or a purchased cathode material batch code; the information of the raw materials used in the production of the purchased commodity includes a traceability code and usage amount information of each of the raw materials used in the production of the purchased commodity; and the purchased commodity traceability code is a purchased material traceability code, a purchased salt traceability code, a purchased cathode raw material traceability code, or a purchased cathode material traceability code. Information related to the purchased commodity traceability code is provided by an external supplier. For a tracing method based on the purchased commodity traceability code, reference can be made to the RMS-based recycled material tracing method of the present disclosure.

In some embodiments, tracing a recycled material by using BTB tracing includes: after producing a self-produced product according to a processing process on the production line, generating a self-produced product traceability code for the self-produced product according to the processing process, where the self-produced product traceability code includes a self-produced product information code and information of raw materials used in the production of the self-produced product, and entering the self-produced product traceability code into a system, where the self-produced product is a black mass, a self-produced salt, a self-produced cathode raw material, a self-produced cathode material, or a battery; the self-produced product information code is a battery scrap code, a process scrap code, a black mass code, a purchased material code, a self-produced salt time period code, a purchased salt time period code, a self-produced cathode raw material batch code, a purchased cathode raw material batch code, a self-produced cathode material batch code, a purchased cathode material batch code, or a battery batch code; and the information of the raw materials used in the production of the self-produced product includes a traceability code and usage amount information of each of the raw materials used in the production of the self-produced product.

In some embodiments, when it is necessary to trace the proportion of recycled materials in a specific product, first, the self-produced product for which recycled material proportion calculation or recycled material tracing is to be performed is determined; then, a traceability code of the self-produced product is acquired; and finally, proportion information and source information of a recycled material in the self-produced product is acquired according to the traceability code of the self-produced product.

In some embodiments, when it is necessary to calculate the proportion of recycled materials in a specific product and trace the recycled materials, the recycled material proportion calculation formulas and the values of related parameters in the formulas may be obtained according to the RMS-based recycled material tracing method and the RMS-based recycled material proportion calculation method disclosed herein, so that an accurate proportion of recycled materials in the product can be obtained, and the recycled materials in the product can be traced more accurately.

It should be noted that all the purchased materials used in the production process of batteries, cathode materials, and production raw materials are materials purchased from external suppliers, the proportion of recycled materials in each of the purchased materials needs to be provided by the corresponding external suppliers, and the external supplier may use the RMS-based recycled material proportion calculation and tracing method provided in the present disclosure.

For example, when a product requiring recycled material tracing is a battery, recycled materials in the battery can be traced according to the RMS-based recycled material tracing method. The method is as follows.

1) A traceability code of the battery to be traced is acquired.

2) A battery batch code and information of raw materials used in production of the battery are acquired according to the traceability code of the battery. The information of the raw materials used in the production of the battery includes a traceability code of a self-produced cathode material, a usage amount of the self-produced cathode material, a traceability code of a purchased cathode material, and a usage amount of the purchased cathode material. Element composition information, element weight information, and recycled material proportion information of the battery are acquired according to the battery batch code.

3) A batch code of the purchased cathode material and information of raw materials used in production of the purchased cathode material are acquired according to the traceability code of the purchased cathode material. Element composition information, element weight information, and recycled material proportion information of the purchased cathode material are acquired according to the batch code of the purchased cathode material. Information related to the traceability code of the purchased cathode material is provided by an external supplier.

4) A batch code of the self-produced cathode material and information of raw materials used in the production of the self-produced cathode material are acquired according to the traceability code of the self-produced cathode material. The information of the raw materials used in the production of the self-produced cathode material includes a traceability code of a self-produced cathode raw material, a usage amount of the self-produced cathode raw material, a traceability code of a purchased cathode raw material, and a usage amount of the purchased cathode raw material. Element composition information, element weight information, and recycled material proportion information of the self-produced cathode material are acquired according to the batch code of the self-produced cathode material.

5) A batch code of the purchased cathode raw material and information of raw materials used in production of the purchased cathode raw material are acquired according to the traceability code of the purchased cathode raw material. Element composition information, element weight information, and recycled material proportion information of the purchased cathode raw material are acquired according to the batch code of the purchased cathode raw material. Information related to the traceability code of the purchased cathode raw material is provided by an external supplier.

6) A batch code of the self-produced cathode raw material and information of raw materials used in the production of the self-produced cathode raw material are acquired according to the traceability code of the self-produced cathode raw material. The information of the raw materials used in the production of the self-produced cathode raw material includes a traceability code of a self-produced salt, a usage amount of the self-produced salt, a traceability code of a purchased salt, and a usage amount of the purchased salt. Element composition information, element weight information, and recycled material proportion information of the self-produced cathode raw material are acquired according to the batch code of the self-produced cathode raw material.

7) A time period code of the purchased salt and information of raw materials used in production of the purchased salt are acquired according to the traceability code of the purchased salt. Element composition information, element weight information, and recycled material proportion information of the purchased salt in the time period are acquired according to time period code of the purchased salt. Information related to the traceability code of the purchased salt is provided by an external supplier.

8) A time period code of the self-produced salt and information of raw materials used in the production of the self-produced salt are acquired according to the traceability code of the self-produced salt. The information of the raw materials used in the production of the self-produced salt includes a traceability code of a black mass, a usage amount of the black mass, a traceability code of a purchased material, and a usage amount of the purchased material. Element composition information, element weight information, and recycled material proportion information of the self-produced salt in the time period are acquired according to time period code of the self-produced salt.

9) A code of the purchased material and information of raw materials used in production of the purchased material are acquired according to the traceability source code of the purchased material. Element composition information, element weight information, and recycled material proportion information of the purchased material are acquired according to the code of the purchased material. Information related to the traceability code of the purchased material is provided by an external supplier.

10) A code of the black mass and information of raw materials used in production of the black mass are acquired according to the traceability code of the black mass. The information of the raw material used in the production of the black mass includes a code of a waste material and a usage amount of the waste material. The code of the waste material includes at least one of a battery scrap code, a process scrap code, or other waste material codes. Element composition information, element weight information, and recycled material proportion information of the black mass are acquired according to the code of the black mass.

Different tracing means including barcode-based tracing, time-based tracing, and batch-based tracing are adopted in different stages to trace recycled materials, to adapt to the processing process of different recycled materials, thereby achieving scientific and systematic tracing of the recycled materials. As such, barcode-based tracing, time-based tracing, and batch-based tracing (i.e., BTB tracing) can be used as an evidence chain, thereby improving the accuracy of recycled material proportion data.

A variety of methods for calculating the proportion of recycled materials in batteries, cathode materials, production raw materials, etc. and tracing the recycled materials have been described above in the present disclosure. These methods form a set of standards for recycled material proportion calculation and tracing, which is briefly referred to as Recycled Material Standard (RMS).

Example 3

FIG. 4 is a schematic structural diagram of an RMS-based recycled material proportion calculation apparatus according to an embodiment of the present disclosure. The RMS-based recycled material proportion calculation apparatus includes a data collection unit 21 and a recycled material proportion calculation unit 22.

The data collection unit 21 is configured for acquiring production material data used in the RMS-based recycled material proportion calculation method of Example 1 in a preset collection period.

The recycled material proportion calculation unit 22 is configured for calculating a proportion of a recycled material by using a calculation formula in the RMS-based recycled material proportion calculation method of Example 1 according to the production material data collected by the data collection unit 21.

In the embodiments of the present disclosure, the data collection unit 21 collects production material data in a process of extracting a self-produced cathode material from a battery scrap on a production line, and transmits the production material data to the recycled material proportion calculation unit 22. After receiving the production material data, the recycled material proportion calculation unit 22 substitutes the production material data into a plurality of recycled material proportion calculation formulas to obtain a recycled material proportion of an element. As such, an accurate recycled material proportion can be obtained and traced using the RMS-based recycled material proportion calculation method.

Example 4

This example of the present disclosure provides an RMS-based recycled material tracing apparatus, including: a tracing unit, configured for tracing a recycled material based on the steps of the RMS-based recycled material tracing method of Example 2.

In some embodiments, tracing a recycled material by using BTB tracing includes: performing barcode-based tracing of the recycled material according to an operation prior to a leaching procedure in a production process, performing time-based tracing of the recycled material according to the leaching procedure, and performing batch-based tracing of the recycled material according to an operation after the leaching procedure.

In the present disclosure, by means of the RMS-based recycled material tracing apparatus, different tracing means including barcode-based tracing, time-based tracing, and batch-based tracing (i.e., BTB tracing) are adopted to trace recycled materials, to adapt to the processing process of different recycled materials, thereby accurately tracing the recycled materials and improving the recovery efficiency of the recycled materials.

Example 5

FIG. 5 is a schematic diagram of an electronic device according to an embodiment of the present disclosure. In FIG. 5, the electronic device 31 includes one or more processors 33 and a memory 32. The memory 32 has one or more computer programs 34 stored thereon. The one or more computer programs 34, when executed by the one or more processors 33, cause the one or more processors 33 to implement the steps of the RMS-based recycled material proportion calculation method of Example 1 or the steps of the RMS-based recycled material tracing method of Example 2.

It should be noted that the electronic device is not limited to a computer, a smartphone, a tablet, and a dedicated intelligent detection instrument.

In the embodiments of the present disclosure, when the RMS-based recycled material calculation method of Example 1 is integrated into an electronic device, the electronic device can implement rapidly on-site recycled material proportion calculation, or when the RMS-based recycled material tracing method of Example 2 is integrated into an electronic device, the electronic device can implement on-site recycled material tracing. Therefore, the schemes of the present disclosure have higher applicability and scalability and can be applied to more scenarios.

Example 6

This embodiment provides a computer-readable storage medium, having a computer program stored therein. The computer program, when executed by a processor, causes the processor to implement the steps of the RMS-based recycled material proportion calculation method of Example 1 or the steps of the RMS-based recycled material tracing method of Example 2.

It should be noted that the computer program is not limited to a computer programming language or pseudocode.

In the embodiments of the present disclosure, by storing the RMS-based recycled material calculation method of Example 1 in the form of a program in a storage medium, or by storing the RMS-based recycled material tracing method of Example 2 on an electronic device, operations such as quick calculation of the proportion of recycled materials or tracing of the recycled materials can be performed by running or reading the executable programs in the storage medium. Therefore, the schemes of the present disclosure have high scalability and can be applied to more operating systems and different application platforms.

It should be understood by those skilled in the art that an embodiment of the present disclosure may further provide a computer program product. Therefore, the present disclosure may be implemented using hardware alone, using software alone, or using a combination of software and hardware. In addition, the present disclosure may be embodied as a computer program product implemented on one or more computer-usable storage media (including, but not limited to, magnetic disk storage, compact disc read-only memory (CD-ROM), optical memory, etc.) containing computer-usable program code therein.

The present disclosure is described with reference to the flowcharts and/or block diagrams of the method, device (system), and computer program product according to embodiments of the present disclosure. It can be understood that each process and/or block of the flowcharts and/or block diagrams, and combination of processes and/or blocks in the flowcharts and/or block diagrams, may be implemented by program instructions. These computer program instructions may be provided to a general-purpose computer, a dedicated computer, an embedded processor, or a processor of another programmable data processing apparatus to generate a machine, so that the instructions executed by the computer or the processor of the another programmable data processing apparatus generate an apparatus for implementing a specific function in one or more processes in the flowcharts and/or in one or more blocks in the block diagrams.

These computer program instructions may also be stored in a computer-readable memory that can guide a computer or another programmable data processing device to work in a specified manner, so that the instructions stored in the computer-readable memory generate a product including an instruction apparatus, where the instruction apparatus implements functions specified in one or more procedures in the flowcharts and/or one or more blocks in the block diagrams.

The computer program instructions may also be loaded onto a computer or other programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

While above exemplary embodiments is only the preferred implementation of the embodiment of the application. It should be appreciated that some improvements and modifications can be made by those skilled in the art without departing from the technical principles of the embodiments of the present disclosure, which are also contemplated to be within the scope of the embodiments of the present disclosure.

**Claims**

1.  A Recycled Material Standard (RMS)-based recycled material proportion calculation method, comprising:

    collecting production material data within a preset system boundary range on a production line in a preset collection period, wherein the production material data comprises: a proportion of a purchased salt in an element i of a salt composition used in production of a self-produced cathode raw material, a proportion of a recycled material in the element i of the purchased salt, a proportion of a self-produced salt in the element i of the salt composition used in the production of the self-produced cathode raw material, and a proportion of a recycled material in the element i of the self-produced salt; and the salt composition used in the production of the self-produced cathode raw material consists of the self-produced salt and the purchased salt; and
    obtaining a proportion of the recycled material in the element i of the self-produced cathode raw material according to the production material data and a preset element-i recycled material proportion calculation formula for the self-produced cathode raw material,
    wherein the self-produced cathode raw material is a compound containing the element i; and the element i is any one of nickel, cobalt, manganese, aluminum, iron, phosphorus, or lithium.

2.  The RMS-based recycled material proportion calculation method of claim 1, wherein when a raw material of the self-produced salt comprises only a recycled material, the proportion of the recycled material in the element i of the self-produced salt is 100%, and the element-i recycled material proportion calculation formula for the self-produced cathode raw material is:

$$R_{Pi} = R_{Mi} * y_i + (1 - y_i),$$

    wherein $y_i$ is the proportion of the purchased salt in the element i of the salt composition used in the production of the self-produced cathode raw material, measured in %; $(1 - y_i)$ is the proportion of the self-produced salt in the element i of the salt composition used in the production of the self-produced cathode raw material, measured in %; $R_{Mi}$ is the proportion of the recycled material in the element i of the purchased salt, measured in %; and $R_{Pi}$ is the proportion of the recycled material in the element i of the self-produced cathode raw material, measured in %.

3.  The RMS-based recycled material proportion calculation method of claim 2, wherein the production material data further comprises: the mass of the element i in the purchased salt used in the production of the self-produced cathode raw material and the mass of the element i in the self-produced salt used in the production of the self-produced cathode raw material; and
    the proportion of the purchased salt in the element i of the salt composition used in the production of the self-produced cathode raw material is expressed as:

$$y_i = \frac{m_{MSRi}}{m_{MSRi} + m_{MRi}},$$

wherein $m_{MSRi}$ is the mass of the element i in the purchased salt used in the production of the self-produced cathode raw material, measured in kg; $m_{MRi}$ is the mass of the element i in the self-produced salt used in the production of the self-produced cathode raw material, measured in kg; and $y_i$ is the proportion of the purchased salt in the element i of the salt composition used in the production of the self-produced cathode raw material, measured in %.

4. The RMS-based recycled material proportion calculation method of claim 2, wherein the production material data further comprises: the mass of the element i in the purchased salt used in the production of the self-produced cathode raw material, a recovery rate of the element i from the salt composition to the self-produced cathode raw material, the mass of the element i in a black mass used in production of the self-produced salt, a recovery rate of the element i from the black mass to the self-produced salt, and the mass of the element i in the self-produced cathode raw material produced;

the proportion of the purchased salt in the element i of the salt composition used in the production of the self-produced cathode raw material is expressed as:

$$y_i = \frac{m_{MSRi} * v_{2i}}{m_{EPi}}$$

wherein $m_{MSRi}$ is the mass of the element i in the purchased salt used in the production of the self-produced cathode raw material, measured in kg; $v_{2i}$ is the recovery rate of the element $i$ from the salt composition to the self-produced cathode raw material, measured in %; and $m_{EPi}$ is the mass of the element i in the self-produced cathode raw material produced, measured in kg; and

the proportion of the self-produced salt in the element i of the salt composition used in the production of the self-produced cathode raw material is expressed as:

$$(1 - y_i) = \frac{m_{Bi} * v_{1i} * v_{2i}}{m_{EPi}}$$

wherein $m_{Bi}$ is the mass of the element i in the black mass used in the production of the self-produced salt, measured in kg; and $v_{1i}$ is the recovery rate of the element i from the black mass to the self-produced salt, measured in %.

5. The RMS-based recycled material proportion calculation method of claim 1, wherein the preset element-i recycled material proportion calculation formula for the self-produced cathode raw material is:

$$R_{Pi} = R_{Mi} * y_i + R_{MBi} * (1 - y_i),$$

wherein $y_i$ is the proportion of the purchased salt in the element i of the salt composition used in the production of the self-produced cathode raw material, measured in %. $(1 - y_i)$ is the proportion of the self-produced salt in the element i of the salt composition used in the production of the self-produced cathode raw material, measured in %; $R_{Mi}$ is the proportion of the recycled material in the element i of the purchased salt, measured in %; $R_{MBi}$ is the proportion of the recycled material in the element i of the self-produced salt, measured in %; and $R_{Pi}$ is the recycled material proportion of the element i of the self-produced cathode raw material, measured in %.

6. The RMS-based recycled material proportion calculation method of claim 5, wherein the production material data further comprises: the mass of the element i in the purchased salt used in the production of the self-produced cathode raw material and the mass of the element i in the self-produced salt used in the production of the self-produced cathode raw material; and

the proportion of the purchased salt in the element i of the salt composition used in the production of the self-produced cathode raw material is expressed as:

$$y_i = \frac{m_{MSRi}}{m_{MSRi} + m_{MRi}},$$

wherein $m_{MSRi}$ is the mass of the element i in the purchased salt used in the production of the self-produced cathode raw material, measured in kg; $m_{MRi}$ is the mass of the element i in the self-produced salt used in the production of the self-produced cathode raw material, measured in kg; and $y_i$ is the proportion of the purchased salt in the element i of the salt composition used in the production of the self-produced cathode raw material, measured in %.

7. The RMS-based recycled material proportion calculation method of claim 5, wherein the production material data further comprises: the mass of the element i in the purchased salt used in the production of the self-produced cathode raw material, a recovery rate of the element i from the salt composition to the self-produced cathode raw material, the mass of the element i in a black mass used in production of the self-produced salt, the mass of the element i in a purchased material used in the production of the self-produced salt, a recovery rate of the element i from the black mass to the self-produced salt, and the mass of the element i in the self-produced cathode raw material produced; the proportion of the purchased salt in the element i of the salt composition used in the production of the self-produced cathode raw material is expressed as:

$$y_i = \frac{m_{MSRi} * v_{2i}}{m_{EPi}}$$

wherein $m_{MSRi}$ is the mass of the element i in the purchased salt used in the production of the self-produced cathode raw material, measured in kg; $v_{2i}$ is the recovery rate of the element i from the salt composition to the self-produced cathode raw material, measured in %; and $m_{EPi}$ is the mass of the element i in the self-produced cathode raw material produced, measured in kg; and
the proportion of the self-produced salt in the element i of the salt composition used in the production of the self-produced cathode raw material is expressed as:

$$(1 - y_i) = \frac{(m_{Bi} + m_{MSCi}) * v_{1i} * v_{2i}}{m_{EPi}}$$

wherein $m_{Bi}$ is the mass of the element i in the black mass used in the production of the self-produced salt, measured in kg; $m_{MSCi}$ is the mass of the element i in the purchased material used in the production of the self-produced salt, measured in kg; and $v_{1i}$ is the recovery rate of the element i from the black mass to the self-produced salt, measured in %.

8. The RMS-based recycled material proportion calculation method of claim 6, wherein the production material data further comprises: the mass of the element i in the black mass used in the production of the self-produced salt, the mass of the element i in the purchased material used in the production of the self-produced salt, and a proportion of a recycled material in element i in the purchased material; and
the proportion of the recycled material in the element i of the self-produced salt is expressed as:

$$R_{MBi} = \frac{m_{Bi} + m_{MSCi} * R_{MSCi}}{m_{Bi} + m_{MSCi}},$$

wherein $m_{Bi}$ is the mass of the element i in the black mass used in the production of the self-produced salt, measured in kg; $m_{MSCi}$ is the mass of the element i in the purchased material used in the production of the self-produced salt, measured in kg; $R_{MSCi}$ is the proportion of the recycled material in the element i of the purchased material, measured in %; and $R_{MBi}$ is the proportion of the recycled material in the element i of the self-produced salt, measured in %.

9. The RMS-based recycled material proportion calculation method of claim 7, wherein the production material data further comprises: the mass of the element i in the black mass used in the production of the self-produced salt, the mass of the element i in the purchased material used in the production of the self-produced salt, and a proportion of a recycled material in element i in the purchased material; and
the proportion of the recycled material in the element i of the self-produced salt is expressed as:

$$R_{MBi} = \frac{m_{Bi} + m_{MSCi} * R_{MSCi}}{m_{Bi} + m_{MSCi}},$$

wherein $m_{Bi}$ is the mass of the element i in the black mass used in the production of the self-produced salt, measured in kg; $m_{MSCi}$ is the mass of the element i in the purchased material used in the production of the self-produced salt, measured in kg; $R_{MSCi}$ is the proportion of the recycled material in the element i of the purchased material, measured in %; and $R_{MBi}$ is the proportion of the recycled material in the element i of the self-produced salt, measured in %.

10. The RMS-based recycled material proportion calculation method of any one of claims 1 to 9, wherein the production material data further comprises: a proportion of a purchased cathode raw material in the element i of all cathode raw materials used in production of a self-produced cathode material, a proportion of a recycled material in the element i of the purchased cathode raw material, and a proportion of a self-produced cathode raw material in the element i of all the cathode raw materials used in the production of the self-produced cathode material;

    a proportion of the recycled material in the element i of the self-produced cathode material is obtained according to the production material data, a proportion of a recycled material in the element i of the self-produced cathode raw material, and a preset element-i recycled material proportion calculation formula for the self-produced cathode material; and
    all the cathode raw materials used in the production of the self-produced cathode material comprise the self-produced cathode raw material and the purchased cathode raw material.

11. The RMS-based recycled material proportion calculation method of claim 10, wherein the preset element-i recycled material proportion calculation formula for the self-produced cathode material is:

$$R_{Ci} = R_{Pi} * (1 - x_i) + R_{Wi} * x_i,$$

    wherein $x_i$ is the proportion of the purchased cathode raw material in the element i of all the cathode raw materials used in the production of the self-produced cathode material, measured in %; $(1 - x_i)$ is the proportion of the self-produced cathode raw material in the element i of all the cathode raw materials used in the production of the self-produced cathode material, measured in %; $R_{Wi}$ is the proportion of the recycled material in the element i of the purchased cathode raw material, measured in %. $R_{Pi}$ is the proportion of the recycled material in the element i of the self-produced cathode raw material, measured in %; and $R_{Ci}$ is the recycled material proportion of the element i of the self-produced cathode material, measured in %.

12. The RMS-based recycled material proportion calculation method of claim 11, wherein the production material data further comprises: the mass of the element i in the purchased cathode raw material used in the production of the self-produced cathode material and the mass of the element i in the self-produced cathode raw material used in the production of the self-produced cathode material; and
    the proportion of the purchased cathode raw material in the element i of all the cathode raw materials used in the production of the self-produced cathode material is expressed as:

$$x_i = \frac{m_{PSi}}{m_{Pi} + m_{PSi}},$$

    wherein $m_{PSi}$ is the mass of the element i in the purchased cathode raw material used in the production of the self-produced cathode material, measured in kg; $m_{Pi}$ is the mass of the element i in the self-produced cathode raw material used in the production of the self-produced cathode material, measured in kg; and $x_i$ is the proportion of the purchased cathode raw material in the element i of all the cathode raw materials used in the production of the self-produced cathode material, measured in %.

13. The RMS-based recycled material proportion calculation method of claim 11, wherein the production material data further comprises: the mass of the element i in the purchased cathode raw material used in the production of the self-produced cathode material, a recovery rate of the element i from the self-produced cathode raw material to the self-produced cathode material, and the mass of the element i in the self-produced cathode material produced; and
    the proportion of the purchased cathode raw material in the element i of all the cathode raw materials used in the production of the self-produced cathode material is expressed as:

$$x_i = \frac{m_{PSi} * v_{3i}}{m_{ECi}},$$

wherein $m_{PSi}$ is the mass of the element i in the purchased cathode raw material used in the production of the self-produced cathode material, measured in kg; $v_{3i}$ is the recovery rate of the element i from the self-produced cathode raw material to the self-produced cathode material, measured in %; and $m_{ECi}$ is the mass of the element i in the self-produced cathode material produced, measured in kg.

14. The RMS-based recycled material proportion calculation method of any one of claims 11 to 13, wherein the production material data further comprises: a proportion of a purchased cathode material in the element i of all cathode materials used in production of a battery, a proportion of a recycled material in the element i of the purchased cathode material, and a proportion of a self-produced cathode material in the element i of all the cathode materials used in the production of the battery;

a proportion of a recycled material in the element i of the battery is obtained according to the production material data, the recycled material proportion of the element i of the self-produced cathode material, and a preset element-i recycled material proportion calculation formula for the battery; and
all the cathode materials used in the production of the battery comprise the self-produced cathode material and the purchased cathode material.

15. The RMS-based recycled material proportion calculation method of claim 14, wherein
the preset element-i recycled material proportion calculation formula for the battery is expressed as:

$$R_i = R_{Ci} * (1 - z_i) + R_{CSi} * z_i,$$

wherein $z_i$ is the proportion of the purchased cathode material in the element i of all the cathode materials used in the production of the battery, measured in %; $(1 - z_i)$ is the proportion of the self-produced cathode material in the element i of all the cathode materials used in the production of the battery, measured in %; $R_{CSi}$ is the proportion of the recycled material in the element i of the purchased cathode material, measured in %; $R_{Ci}$ is the proportion of the recycled material in the element i of the self-produced cathode material, measured in %; and $R_i$ is the proportion of the recycled material in element i of the battery.

16. The RMS-based recycled material proportion calculation method of claim 15, wherein the production material data further comprises: the mass of the element i in the purchased cathode material used in the production of the battery and the mass of the element i in the self-produced cathode material used in the production of the battery; and
the proportion of the purchased cathode material in the element i of all the cathode materials used in the production of the battery is expressed as:

$$z_i = \frac{m_{CSi}}{m_{Ci} + m_{CSi}},$$

wherein $m_{CSi}$ is the mass of the element i in the purchased cathode material used in the production of the battery, measured in kg; $m_{Ci}$ is the mass of the element i in the self-produced cathode material used in the production of the battery, measured in kg; and $z_i$ is the proportion of the purchased cathode material in the element i of all the cathode materials used in the production of the battery, measured in %.

17. The RMS-based recycled material proportion calculation method of claim 15, wherein the production material data further comprises: the mass of the element i in the purchased cathode material used in the production of the battery, a recovery rate of the element i from all the cathode materials to the battery, and the mass of the element i in the battery produced; and
the proportion of the purchased cathode material in the element i of all the cathode materials used in the production of the battery is expressed as:

$$z_i = \frac{m_{CSi} * v_{4i}}{m_{Ei}},$$

wherein $m_{CSi}$ is the mass of the element i in the purchased cathode material used in the production of the battery, measured in kg; $v_{4i}$ is the recovery rate of the element i from all the cathode materials to the battery, measured in %; and $m_{Ei}$ is the mass of the element i in the battery produced, measured in kg.

**18.** The RMS-based recycled material proportion calculation method of claim 11, wherein the production material data further comprises: a proportion of a recycled raw material j in the element i of the purchased cathode raw material and a proportion of recycled raw material j in the element i of the self-produced cathode raw material; j is a battery scrap or a process scrap;

a proportion of the recycled raw material j in the element i of the self-produced cathode material is obtained according to the production material data and a preset formula for calculating the proportion of the recycled raw material j in the element i of the self-produced cathode material; and
the preset formula for calculating the proportion of the recycled raw material j in the element i of the self-produced cathode material is:

$$R_{Cij} = R_{Pij} * (1 - x_i) + R_{Wij} * x_i,$$

wherein $x_i$ is the proportion of the purchased cathode raw material in the element i of all the cathode raw materials used in the production of the self-produced cathode material, measured in %; $(1 - x_i)$ is the proportion of the self-produced cathode raw material in the element i of all the cathode raw materials used in the production of the self-produced cathode material, measured in %; $R_{Wij}$ is the proportion of the recycled raw material j in the element i of the purchased cathode raw material, measured in %; $R_{Pij}$ is the proportion of the recycled raw material j in the element i of the self-produced cathode raw material, measured in %; and $R_{Cij}$ is the proportion of the recycled raw material j in the element i of the self-produced cathode material.

**19.** The RMS-based recycled material proportion calculation method of claim 14, wherein the production material data further comprises: a proportion of a recycled raw material j in the element i of the purchased cathode material and a proportion of recycled raw material j in the element i of the self-produced cathode material; j is a battery scrap or a process scrap;
a formula for calculating a proportion of the recycled raw material j in the element i of the battery is expressed as:

$$R_{ij} = R_{Cij} * (1 - z_i) + R_{CSij} * z_i,$$

wherein $z_i$ is the proportion of the purchased cathode material in the element i of all the cathode materials used in the production of the battery, measured in %; $(1 - z_i)$ is the proportion of the self-produced cathode material in the element i of all the cathode materials used in the production of the battery, measured in %; $R_{CSij}$ is the proportion of the recycled raw material j in the element i of the purchased cathode material, measured in %; $R_{Cij}$ is the proportion of the recycled raw material j in the element i of the self-produced cathode material, measured in %; and $R_{ij}$ is the proportion of the recycled raw material j in the element i of the battery.

**20.** A Recycled Material Standard (RMS)-based recycled material tracing method, comprising:

tracing a recycled material by using BTB tracing based on the RMS-based recycled material proportion calculation method of any one of claims 1 to 19,
wherein tracing a recycled material by using BTB tracing comprises:
performing barcode-based tracing of the recycled material according to an operation prior to a leaching procedure in a production process, performing time-based tracing of the recycled material according to the leaching procedure, and performing batch-based tracing of the recycled material according to an operation after the leaching procedure.

**21.** The RMS-based recycled material tracing method of claim 20, wherein:

the barcode-based tracing comprises: generating a code for each battery scrap, process scrap, black mass, or purchased material, wherein the code comprises element composition information, element weight information, and recycled material proportion information; and entering the code into a system;
the time-based tracing comprises: labeling a self-produced salt and a purchased salt according to a time period and generating a time period code corresponding to the self-produced salt and a time period code corresponding to the purchased salt, wherein the time period code comprises element composition information, element weight information, and recycled material proportion information corresponding to the time period; and entering the time period codes into a system; and
the batch-based tracing comprises: generating a batch code for each batch of self-produced cathode raw materials, each batch of purchased cathode raw materials, each batch of self-produced cathode materials, each batch of purchased cathode materials, or each batch of batteries, wherein the batch code comprises element composition information, element weight information, and recycled material proportion information; and entering the batch code into a system.

22. The RMS-based recycled material tracing method of claim 21, comprising:

generating a purchased commodity traceability code for a purchased commodity, wherein the purchased commodity traceability code comprises a purchased commodity information code and information of raw materials used in production of the purchased commodity, and entering the purchased commodity traceability code into a system, wherein
the purchased commodity is a purchased material, a purchased salt, a purchased cathode raw material, or a purchased cathode material;
the purchased commodity information code is a purchased material code, a purchased salt time period code, a purchased cathode raw material batch code, or a purchased cathode material batch code;
the information of the raw materials used in the production of the purchased commodity comprises a traceability code and usage amount information of each of the raw materials used in the production of the purchased commodity; and
the purchased commodity traceability code is a purchased material traceability code, a purchased salt traceability code, a purchased cathode raw material traceability code, or a purchased cathode material traceability code.

23. The RMS-based recycled material tracing method of claim 21 or 22, comprising:

after producing a self-produced product according to a processing process on the production line, generating a self-produced product traceability code for the self-produced product according to the processing process, wherein the self-produced product traceability code comprises a self-produced product information code and information of raw materials used in the production of the self-produced product, and entering the self-produced product traceability code into a system, wherein
the self-produced product is a black mass, a self-produced salt, a self-produced cathode raw material, a self-produced cathode material, or a battery;
the self-produced product information code is a battery scrap code, a process scrap code, a black mass code, a purchased material code, a self-produced salt time period code, a purchased salt time period code, a self-produced cathode raw material batch code, a purchased cathode raw material batch code, a self-produced cathode material batch code, a purchased cathode material batch code, or a battery batch code; and
the information of the raw materials used in the production of the self-produced product comprises a traceability code and usage amount information of each of the raw materials used in the production of the self-produced product.

24. The RMS-based recycled material tracing method of claim 23, comprising:

determining the self-produced product for which recycled material proportion calculation or recycled material tracing is to be performed;
acquiring a traceability code of the self-produced product; and
acquiring proportion information and source information of a recycled material in the self-produced product according to the traceability code of the self-produced product.

25. A Recycled Material Standard (RMS)-based recycled material proportion calculation apparatus, comprising: a data collection unit and a recycled material proportion calculation unit, wherein

the data collection unit is configured for acquiring production material data used in the RMS-based recycled material proportion calculation method of any one of claims 1 to 19 in a preset collection period; and
the recycled material proportion calculation unit is configured for calculating a proportion of a recycled material by using a calculation formula in the RMS-based recycled material proportion calculation method of any one of claims 1 to 19 according to the production material data collected by the data collection unit.

26. A Recycled Material Standard (RMS)-based recycled material tracing apparatus, comprising: a tracing unit, configured for tracing a recycled material based on the RMS-based recycled material tracing method of any one of claims 20 to 24.

27. An electronic device, comprising: one or more processors; and a memory, storing one or more programs which, when executed by the one or more processors, cause the one or more processors to perform the steps of the RMS-based recycled material proportion calculation method of any one of claims 1 to 19 or the steps of the RMS-based recycled material tracing method of any one of claims 20 to 24.

28. A computer-readable storage medium, having a computer program stored therein, wherein the computer program, when executed by a processor, causes the processor to perform the steps of the RMS-based recycled material proportion calculation method of any one of claims 1 to 19 or the steps of the RMS-based recycled material tracing method of any one of claims 20 to 24.

Collecting production material data within a preset system boundary range on a production line in a preset collection period, where the production material data includes: a proportion of a purchased salt in an element i of a salt composition used in production of a self-produced cathode raw material, a proportion of a recycled material in the element i of the purchased salt, a proportion of a self-produced salt in the element i of the salt composition used in the production of the self-produced cathode raw material, and a proportion of a recycled material in the element i of the self-produced salt; and the salt composition used in the production of the self-produced cathode raw material includes the self-produced salt and the purchased salt

— S1

Obtaining a proportion of the recycled material in the element i of the self-produced cathode raw material according to the production material data and a preset element-i recycled material proportion calculation formula for the self-produced cathode raw material

— S2

FIG. 1

FIG. 2

Recycled cathode material → Battery

Purchased cathode material → Recycled cathode material

FIG. 3

Data collection unit — 21

Recycled material proportion calculation unit — 22

FIG. 4

Electronic device — 31

Memory — 32

Computer program — 34

Processor — 33

FIG. 5

## INTERNATIONAL SEARCH REPORT

| | International application No. |
|---|---|
| | **PCT/CN2024/134039** |

**A. CLASSIFICATION OF SUBJECT MATTER**

G06Q30/018(2023.01)i; G06Q10/30(2023.01)i; G16C20/30(2019.01)i

According to International Patent Classification (IPC) or to both national classification and IPC

**B. FIELDS SEARCHED**

Minimum documentation searched (classification system followed by classification symbols)

IPC: G06Q G16C

Documentation searched other than minimum documentation to the extent that such documents are included in the fields searched

Electronic data base consulted during the international search (name of data base and, where practicable, search terms used)

CNABS, CNTXT, CNKI, WPABS, CJFD, VEN, USTXT, WOTXT, EPTXT: 电池, 电极, 正极, 材料, 回收, 再生, 占比, 比例, 镍, 钴, 锰, 铝, 铁, 磷, 锂, battery, cell, positive, recycle, regenerate, material, proportion, rate

**C. DOCUMENTS CONSIDERED TO BE RELEVANT**

| Category* | Citation of document, with indication, where appropriate, of the relevant passages | Relevant to claim No. |
|---|---|---|
| PX | CN 117836791 A (GUANGDONG BRUNP RECYCLING TECHNOLOGY CO., LTD. et al.) 05 April 2024 (2024-04-05)<br>claims 1-13, and description, paragraphs [0002]-[0192] | 1-28 |
| A | CN 110616331 A (QUZHOU HUAYOU RESOURCES RECYCLING TECHNOLOGY CO., LTD.) 27 December 2019 (2019-12-27)<br>description, paragraphs [0038]-[0065] | 1-28 |
| A | CN 102676827 A (CHERY AUTOMOBILE CO., LTD.) 19 September 2012 (2012-09-19)<br>description, paragraphs [0042]-[0116] | 1-28 |
| A | CN 114067922 A (GUANGDONG BRUNP RECYCLING TECHNOLOGY CO., LTD. et al.) 18 February 2022 (2022-02-18)<br>description, paragraphs [0004]-[0069] | 1-28 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **20 January 2025** | **28 January 2025** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/134039**

| Patent document cited in search report | | | Publication date (day/month/year) | Patent family member(s) | | | Publication date (day/month/year) |
|---|---|---|---|---|---|---|---|
| CN | 117836791 | A | 05 April 2024 | None | | | |
| CN | 110616331 | A | 27 December 2019 | CN | 110616331 | B | 30 November 2021 |
| CN | 102676827 | A | 19 September 2012 | CN | 102676827 | B | 10 June 2015 |
| CN | 114067922 | A | 18 February 2022 | WO | 2023071422 | A1 | 04 May 2023 |
| | | | | EP | 4425395 | A1 | 04 September 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023134168